# EUROPEAN PATENT SPECIFICATION

(11) **EP 2 233 625 B1**
(45) Date of publication and mention of the grant of the patent: **13.03.2019**
(21) Application number: 09700834.6
(22) Date of filing: 08.01.2009
(51) Int. Cl.: D04H 3/04, B29C 70/20, B32B 5/28

(54) **PROCESS FOR PRODUCING REINFORCING FIBER BASE OF CURVED SHAPE**
VERFAHREN FÜR DIE HERSTELLUNG VON VERSTÄRKUNGSFASERBASIS MIT GEKRÜMMTER FORM
PROCÉDÉ DE FABRICATION DE BASE DE FIBRE DE RENFORCEMENT DE FORME COURBÉE

(30) Priority: 11.01.2008 JP 2008004249; 24.12.2008 JP 2008328120
(43) Date of publication of application: 29.09.2010
(73) Proprietor: Toray Industries, Inc., Tokyo 103-8666 (JP)
(72) Inventor: SHINODA, Tomoyuki, Iyo-gun Ehime 791-3193 (JP); KIBE, Ryuzo, Iyo-gun Ehime 791-3193 (JP); YAMAMOTO, Kohnosuke, Iyo-gun Ehime 791-3193 (JP)
(74) Representative: Hoefer & Partner Patentanwälte mbB
(86) International application number: PCT/JP2009/050105
(87) International publication number: WO 2009/088029

(56) References cited:
- EP-A1- 1 419 875
- WO-A1-97/20092
- WO-A1-2004/016844
- WO-A2-2006/119002
- WO-A2-2006/119002
- JP-A- 2005 022 396
- US-A- 5 394 906

## Description

### Technical Field of the Invention

The present invention relates to a process for producing a curved reinforcing fiber layered product having a curved shape along a longitudinal direction efficiently.

### Background Art of the Invention

Fiber-reinforced resin composite materials are broadly known as light materials high in strength and stiffness. In case where a relatively long fiber-reinforced resin composite material is molded, in order to ensure a high strength or stiffness in a target direction, a structure is frequently employed wherein a layered product is formed by layering a plurality of reinforcing fiber layers whose orientation directions of reinforcing fibers are set at respective predetermined directions. Although there is a case of employing a layered product with a formation of a prepreg in which non-cured resin is impregnated into reinforcing fibers, in consideration of easiness of production to a target shape, usually a process for producing a fiber-reinforced resin composite material having a predetermined shape by preparing a dry reinforcing-fiber layered product without resin impregnated, forming the reinforcing-fiber layered product in a preform having a predetermined shape, impregnating a matrix resin into the formed preform, and curing the resin.

Recently, for example, for a structural member of a body of an airplane, etc., has been required a relatively long fiber-reinforced resin composite material having a curved shape along a longitudinal direction, in particular, a curved fiber-reinforced resin composite material whose cross-sectional shape is not merely flat-plate like but which has a bent portion with a flange portion and the like. In case where the above-described process for producing a fiber-reinforced resin composite material is applied to molding of a fiber-reinforced resin composite material having such a curved shape, devices for finally obtaining a molded product having a target preformance are required for respective steps of a step for preparing reinforcing fiber substrates each having a curved shape, a step for preparing a layered product of reinforcing fiber layers by layering a plurality of the prepared reinforcing fiber substrates, a step for forming the prepared dry reinforcing-fiber layered product in a preform having a predetermined shape, and a step for impregnating a matrix resin into the formed preform, curing the resin and molding a fiber-reinforced resin composite material having a predetermined shape. Particularly, for a step for preparing a reinforcing fiber substrate with a curved flat shape in which reinforcing fiber yarns are oriented in a desirable direction on the premise that a flange portion is finally provided, for a step for preparing a reinforcing-fiber layered product by layering a plurality of flat-plate like reinforcing fiber layers each having a curved shape so that respective layers can maintain target fiber orientation, and for a step for forming a preform having a predetermined cross-sectional shape by bending a predetermined portion of the prepared curved reinforcing-fiber layered product, special devices are required in order to obtain a curved reinforcing-fiber layered product or preform having a target formation.

In order to prepare the above-described curved reinforcing-fiber layered product and preform formed therefrom, Patent document 1 discloses a three-dimensional fiber structural body having a sector plate-like portion in which a plurality of yarn layers, including a yarn layer comprising 0 degree arranged yarn arranged at a concentric arc condition, are bound by thickness-direction yarns. Further, Patent document 2 discloses a process for producing a curved fiber-reinforced composite structural member wherein a reinforcing fiber layer is formed by laying up a reinforcing fiber substrate on an upper surface of a mold, having a predetermined cross-sectional shape and curved along a longitudinal direction, along the curved shape of the mold, and thereon, reinforcing fiber layers whose reinforcing fibers are oriented obliquely or woven fabric layers are laid up in order along the cross-sectional shape of the mold. Furthermore, Patent document 3 discloses a process for producing a curved beam of fiber-reinforced composite material wherein a flat-plate like prepreg, including reinforcing fibers oriented in directions different from each other and impregnated with resin, is placed on a mold having a predetermined cross-sectional shape and curved along a longitudinal direction, and both end portions in the transverse direction of the prepreg are bent in order in directions each of that is to be brought into contact with a side surface of the mold.

In the three-dimensional fiber structural body disclosed in Patent document 1, because the sector plate-like yarn layer is formed using a jig of truncated cone for arranging fiber bundles, it takes a long time to form a curved yarn layer, and therefore, there is a problem that the productivity is bad. Further, because a plurality of yarn layers are bound by thickness-direction yarns, additional time is further required for the binding, and if the layered product is taken out from the fiber bundle arranging jig of truncated cone, there is also a problem that a waviness, originating from a difference between inner and outer circumferential length of the truncated cone ascribed to the thickness of the layered product, occurs (namely, when the layered product taken out from the fiber bundle arranging jig of truncated cone is placed on a table whose upper surface is flat at a condition being expanded in a flat-plate like form, because arc wave shapes along the outer surface of the truncated cone of the fiber bundle arranging jig are left in the layered product at a condition where they are connected to each other, there occurs a problem that the layered product cannot be corrected into a flat-plate formation (a flat-plate formation having a curved shape at a planar condition)). Further, in the process for producing a curved fiber-reinforced composite structural member disclosed in Patent document 2, because the respective reinforcing fiber layers are layered in order and at the same time of the layering the forming along thee cross-sectional shape of the mold is carried out, the forming operation requiring handling and time becomes necessary for each reinforcing fiber layer, it takes a very long time by the time for completing a preform finally formed in a predetermined shape, and therefore, there is also a problem that the productivity is bad. In particular, because 0 degree layer, in which fibers are disposed along the circumferential direction, is necessary to be laid up separately for the web portion and for the flange portion, the time required therefor is particularly long. Furthermore, in the process for producing a curved beam disclosed in Patent document 3, because a method is employed wherein basically a prepreg curved along the longitudinal direction is prepared in advance and the prepreg is formed in a predetermined cross-sectional shape, the process cannot be applied to a process targeted in the present invention wherein a dry reinforcing-fiber layered product is prepared in advance, after it is formed in a preform having a predetermined shape, a matrix resin is impregnated into the formed preform and the resin is cured to mold a fiber-reinforced resin composite material having a predetermined shape. Further, in this Patent document 3, there is no description with respect to disposition of reinforcing fibers along a curved shape.

Further, separately from a composite material having the above-described shape curved along a longitudinal direction, in order to form a flange portion in a long fiber-reinforced resin composite material, frequently employed is a process for bending and forming both sides in cross section of a flat-plate like reinforcing fiber substrate and impregnating a matrix resin into the dry reinforcing fiber substrate formed in a predetermined shape and curing the resin. In case where a prepreg is used as a reinforcing fiber substrate, it is frequently employed to bend and form a predetermined flange portion in the prepreg and thereafter to cure the resin by heating. Patent document 4 discloses a process for using a bladder, and forming a reinforcing fiber substrate in a predetermined C-shaped sectional shape by pressing predetermined portions of the reinforcing fiber substrate to a mandrel by the expansion operation of the bladder. In this process, however, because the bladder is provided at a condition of facing to the mandrel and interposing the reinforcing fiber substrate therebetween, the expanded bladder can press both side portions of the reinforcing fiber substrate only in a single direction, and therefore, it can be formed only in a C-shaped sectional shape as described above, and it cannot deal with forming in Z-shaped sectional shape and the like. Further, because the expansion operation of a single bladder is utilized, the both side portions of reinforcing fiber substrate are bent substantially at the same time, and therefore, it becomes a forming process which is likely to leave wrinkles and the like in the bent portions, etc. at the time of bending. Further, Patent document 5 discloses a process for forming a layered product of prepregs in a T shape by nipping it in a press machine, and thereafter, by bending it by pressing a roller to a top portion thereof, forming a J-shape or Z-shape section. In this process, however, at least a drivable press machine, punching machine and roller device are required, and therefore, the apparatus becomes large-scaled, complicated and expensive. Furthermore, although in Patent documents 6, 7 a technology relating to a spiral woven fabric in which reinforcing fiber yarns are used as warps and wefts of the woven fabric and the woven fabric is extended spirally is disclosed, this technology is basically different from the present invention described later, and the woven fabric is made spirally by continuous weaving and the warps and wefts are both composed of reinforcing fiber yarns.
Patent document 8 teaches that fibrous preforms for producing annular parts from a composite material are made by winding stacked layers of a spiral or helical fabric strip including substantially helical warp yarns and substantially radial weft yarns. The mass per unit area of the helical fabric warp increases from the inner to the outer diameter thereof, and the layers of the fabric strip are needled so that they are bonded together by fibres drawn from the fabric yarns. The increase in the mass per unit area of the warp at least approximately compensates, as far as the volume density of the preform is concerned, for the decrease in the weft density between the inner diameter and the outer diameter.
Patent document 1: JP-A-2005-97759
Patent document 2: U.S. Patent Publication 2006/0249868A1
Patent document 3: European Patent Publication 1666353A1
Patent document 4: U.S. Patent 5,772,950
Patent document 5: JP-A-2004-351882
Patent document 6: Japanese Patent 3,225,323
Patent document 7: Japanese Patent 3,234,918
Patent document 8: WO 97/20092 A1

### Disclosure of the Invention

### Problems to be solved by the Invention

Accordingly, paying attention to the above-described problems in the conventional technologies, an object of the present invention is to provide a process for producing a reinforcing-fiber layered product capable of making the layered product efficiently in a short time. Further described but not part of the present invention are a preform prepared by forming the reinforcing-fiber layered product precisely in a predetermined cross-sectional shape having a flange portion and the like and a process for producing a preform capable of forming the preform in a predetermined cross-sectional shape efficiently in a short time, and a relatively long fiber-reinforced resin composite material molded using the preform and having a curved shape along a longitudinal direction and a process for producing the same. Further described but not part of the present invention is a fiber-reinforced resin composite material, wherein, in a long fiber-reinforced resin composite material having a shape curved along a longitudinal direction, when the circumferential direction of the curved shape is determined as a reference direction (0 degree direction), all reinforcing fibers are arranged by employing the reference of this 0 degree direction, and a process for producing the same. By arranging reinforcing fibers in the 0 degree direction along the curved circumferential direction, the properties in the circumferential direction can be improved, and in any position in the longitudinal direction along the circumferential direction, an identical layering structure can be provided relative to 0 degree direction which is substantially the circumferential direction of the curve.

Further described but not part of the present invention is a process for producing a preform, in which, particularly when the above-described preform is produced, basically a large-scaled drive system is not required, an installation with a simple structure and capable of being structured inexpensively may be used, and in addition to a C-shaped section, even if a sectional shape such as a Z-shaped section, in which the bending directions for forming the preform are different from each other, is employed, the preform with a predetermined cross-sectional shape can be formed smoothly and easily without causing the problems such as wrinkles.

### Means for solving the Problems

To achieve the above objects, a process for producing a curved reinforcing-fiber layered product by layering a plurality of flat-plate like reinforcing fiber layers each having a curved shape as a planar shape, comprises the steps of: forming a curved circumferentially oriented reinforcing fiber layer, in which a plurality of reinforcing fiber yarns are arranged in parallel to a direction along a circumferential direction of said curved shape, using a curved reinforcing fiber substrate having a curved shape as a planar shape, wherein a plurality of reinforcing fiber yarns are arranged in parallel to a direction along a circumferential direction of said curved shape, and auxiliary weft yarns are arranged in directions crossing said plurality of reinforcing fiber yarns each arranged in one direction of said circumferential direction; and
layering said curved circumferentially oriented reinforcing fiber layer as at least one layer among a plurality of reinforcing fiber layers to be layered, characterized in that at least one layer among said reinforcing fiber layers to be layered different from said curved circumferentially oriented reinforcing fiber layer is formed, wherein a plurality of orthogonally cut unidirectional reinforcing fiber yarn bundles are prepared by cutting a unidirectional reinforcing fiber woven fabric, formed from reinforcing fiber yarn groups each arranged with a plurality of continuous reinforcing fiber yarns in one direction in parallel to each other and auxiliary yarns extending in a direction crossing said reinforcing fiber yarns and bundling a plurality of said reinforcing fiber yarn groups, in a direction perpendicular to said reinforcing fiber yarns, and said plurality of orthogonally cut unidirectional reinforcing fiber yarn bundles are disposed in a direction along a circumferential direction of said curved shape so that reinforcing fiber yarns of respective yarn bundles extend in a radial direction of said curved shape and/or characterized in that at least one layer among said reinforcing fiber layers to be layered different from said curved circumferentially oriented reinforcing fiber layer is formed, wherein a plurality of acute-angle cut unidirectional reinforcing fiber yarn bundles are prepared by cutting a unidirectional reinforcing fiber woven fabric, formed from reinforcing fiber yarn groups each arranged with a plurality of continuous reinforcing fiber yarns in one direction in parallel to each other and auxiliary yarns extending in a direction crossing said reinforcing fiber yarns and bundling a plurality of said reinforcing fiber yarn groups, in a direction defined at a predetermined acute angle relative to said reinforcing fiber yarns, and said plurality of acute-angle cut unidirectional reinforcing fiber yarn bundles are disposed in a direction along a circumferential direction of said curved shape so that reinforcing fiber yarns of respective yarn bundles extend in a direction defined at a predetermined angle relative to a radial direction of said curved shape.

In such a curved reinforcing fiber substrate described herein but not forming part of the present invention, the reinforcing fiber yarns are arranged in parallel to a direction (0 degree direction) along a circumferential direction of the curved shape, and auxiliary weft yarns are arranged in directions crossing them. Namely, although in a usual unidirectional reinforcing fiber substrate a plurality of reinforcing fiber yarns to be arranged in parallel to each other are arranged linearly in one direction and the substrate is used as it is, in the present invention, in the above-described substrate, a structure is employed wherein the respective reinforcing fiber yarns are arranged in parallel to a direction (0 degree direction) along a circumferential direction of the curved shape, and the arrangement formation of the reinforcing fiber yarns is maintained by the auxiliary weft yarns. Because the arrangement formation of the reinforcing fiber yarns is maintained by the auxiliary weft yarns, when this curved reinforcing fiber substrate is used, in particular, even when they are layered in order to prepare a layered product, a predetermined formation of substrate layers is not broken, and a layered product having a target curved shape is formed precisely. Therefore, by using this curved reinforcing fiber substrate, even in a fiber-reinforced resin composite material with a curved shape which is finally molded, the arrangement formation of the reinforcing fiber yarns in the direction (0 degree direction) along the circumferential direction of the curved shape, namely, a desirable arrangement formation of the reinforcing fiber yarns in order to achieve targeted strength and stiffness after molding of a relatively long fiber reinforced composite material curved along the longitudinal direction, can be maintained.

In the above-described curved reinforcing fiber substrate, it is preferred that a necessary sized one-layer substrate is constructed as a one-sheet form by the weave structure of the reinforcing fiber yarns, auxiliary weft yarns, and auxiliary warp yarns arranged as needed. By this, when a layered product is prepared, because the number of substrates to be layered may be few, the time required for the layering can be greatly reduced, and therefore, such a structure is preferred.

For the reinforcing fiber yarns used in the curved reinforcing fiber substrate, high-strength and high-elastic modulus fibers such as carbon fibers, glass fibers, aramide fibers or BPBO (polyparaphenylene benzobisoxazole) fibers are preferably used. Among these fibers, carbon fibers are more preferable because carbon fibers are higher in strength and elastic modulus, thereby obtaining an FRP more excellent in mechanical properties. Carbon fibers having a tensile strength of 4500 MPa or more and a tensile elastic modulus of 250 GPa or more are further preferable because more excellent composite properties can be obtained.

The weft preferably has a main constituent of at least one selected from the group consisting of nylon 6 fiber, nylon 66 fiber, nylon 11 fiber, nylon 12 fiber, polyester fiber, polyaramide fiber, polyphenylenesulfide fiber, poluetherimide fiber, polyethersulfone fiber, polyketone fiber, polyetherketone fiber, polyetheretherketone fiber and glass fiber. Among these, nylon 66 fiber and glass fiber are preferable because the adhesive property with a matrix resin is good. Further, glass fiber is more preferable because it does not shrink by heat.

Further, the weft is preferably a multifilament yarn. If it is a multifilament yarn, it becomes possible to make the size (diameter) of the filament single fiber small. When this is used at a condition having substantially no twist, in the substrate, a formation is realized wherein the filament single fibers of the wefts are arranged in parallel to each other without being overlapped in the thickness direction, the thickness of the weft becomes thin, the crimp due to the entanglement or crossing of the reinforcing fiber yarns and the wefts becomes small, the straightness of the reinforcing fibers in the fiber-reinforced composite material is increased, and high mechanical properties can be realized.

From similar reasons, the fineness of the weft is preferably more than 6 decitex and less than 70 decitex. More preferably, it is more than 15 decitex and less than 50 decitex. Further, the weave density of the wefts is preferably more than 0.3/cm and less than 6.0/cm, and if the weave density of the wefts is smaller than this range, because a disturbance of wefts is liable to occur during the weaving or in the resin powder scattering process after the weaving, such a condition is not preferred. Further, because it is hard to keep the curved shape, such a condition is not preferred. If the weave density of the wefts becomes greater than the above-described range, the crimp of the reinforcing fiber yarns becomes great. Further, the amount of the fibers of the wefts becomes great, because the thermal resistance of the fiber-reinforced composite material is reduced by the moisture absorption of the wefts, such a condition is not preferred.

Namely, the curved reinforcing fiber substrate is a unidirectional reinforcing fiber substrate (UD substrate: Unidirectional substrate) characterized in that the circumferential direction of the curved shape is referred to as 0 degree direction and the reinforcing fiber yarns are arranged in one direction, and the wefts are not expected with reinforcing effect.

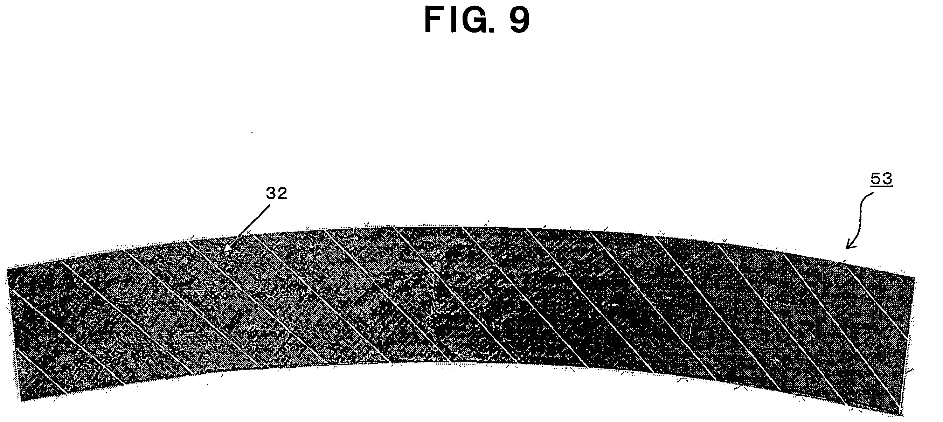

Further, the curved reinforcing fiber substrate is preferably a NCW (non-Crimp Woven) substrate in which auxiliary warp yarns are provided and the crimp of the reinforcing fiber yarns is substantially suppressed by locally having a woven fabric structure as shown in Fig. 9 described later.

In the above-described curved reinforcing fiber substrate, a formation can be employed wherein the above-described plurality of reinforcing fiber yarns are arranged in parallel to a direction along the circumferential direction of the curved shape so that the yarns are almost uniformly distributed substantially over the entirety of the curved substrate plane. In this case, the above-described auxiliary weft yarns may be arranged so as to thread the reinforcing fiber yarns for each of an appropriate number of reinforcing fiber yarns. However, particularly a formation is preferred wherein the above-described reinforcing fiber yarns are formed in a plurality of bundles, and the plurality of bundles of reinforcing fiber yarns are arranged so as to be adjacent to each other in a radial direction of the curved shape. As the form of each reinforcing fiber yarn bundle in which a plurality of reinforcing fiber yarns are bundled, various kinds of cross-sectional shapes can be employed such as circular, elliptic or rectangular cross-sectional shape. In particular, a formation is preferred wherein each reinforcing fiber yarn bundle is formed as a tape-like shape having a rectangular cross-sectional shape. If the width of the reinforcing fiber yarn bundle due to the widths of a plurality of reinforcing fiber yarns is relatively small and the bundle has a form of a band-like sheet, even for a shape having a large curvature (a small radius of curvature) of the curved shape, because it can be disposed while suppressing occurrence of snaking or wrinkles of reinforcing fibers and a substrate with a desirable formation is easily prepared, such a formation is preferred. On the other hand, because it becomes necessary to dispose a plurality of reinforcing fiber yarn bundles in order to form a single substrate, the width of each reinforcing fiber yarn bundle is preferably set adequately in accordance with the curved shape. Thus, in case where the formation of the reinforcing fiber yarn bundles is employed, a formation can be employed wherein the above-described auxiliary weft yarns are arranged in directions crossing the plurality of reinforcing fiber yarns in the range of each reinforcing fiber yarn bundle formed as a tape-like shape, etc. (namely, a formation wherein the auxiliary weft yarns do not extend between adjacent reinforcing fiber yarn bundles). In case where the plurality of reinforcing fiber yarns forming the curved reinforcing fiber substrate are formed as plurality of tape-like reinforcing fiber yarn bundles, because the width of each reinforcing fiber yarn bundle may be small as compared with the width of the entire curved reinforcing fiber substrate, each reinforcing fiber yarn bundle itself becomes very easy to be handled, it becomes possible to dispose each reinforcing fiber yarn bundle precisely along a predetermined curved shape, and at the same time, it becomes possible to easily adjust the width of the entire curved reinforcing fiber substrate precisely to a target width by controlling the arrangement number of the reinforcing fiber yarn bundles, and therefore, a curved reinforcing fiber substrate having a desirable shape can be obtained further easily.

Further, in the curved reinforcing fiber substrate, a formation can be employed wherein auxiliary warp yarns extending in parallel to the reinforcing fiber yarns are arranged between the reinforcing fiber yarns. By thus arranging auxiliary warp yarns as needed, a weave structure due to the reinforcing fiber yarns, the auxiliary weft yarns and the auxiliary warp yarns can be easily formed.

The warps are preferably glass fibers which do not shrink in a process scattered with resin powder or by heating at the time of molding by curing of a matrix resin. Because the warps substantially are not expected with a reinforcing effect, the fineness of the warp is preferably more than 100 decitex and less than 470 decitex.

The disposition of the warps between the reinforcing fiber yarns is preferable because spaces provided by the warps function as flow paths of resin. Further, by employing a weave structure of warps 33 and wefts 34 shown in Fig. 9 described later, crimps of reinforcing fiber yarns 32 can be decreased, and such a structure is preferred.

Further, in the curved reinforcing fiber substrate, a formation can be employed wherein a resin material whose main component is a thermoplastic resin adheres to at least one surface of the substrate at a dot, linear or discontinuous condition. The adhesion of the resin material to the curved reinforcing fiber substrate is preferable because by that shift of the reinforcing fiber yarns and the auxiliary yarns forming the substrate can be suppressed and therefore the shape of the substrate can be more stabilized. This formation assumes to form a layered product described later using this curved reinforcing fiber substrate and another curved reinforcing fiber substrate. Namely, by the resin material adhering at a dot, linear or discontinuous condition, adjacent reinforcing fiber layers in the layered product can be adequately bonded to each other. In this bonding, because a bonding force such as a force required for temporary fixing merely to keep the shape as a layered product and further to keep the shape of a preform when formed as a preform may be enough, the resin material is not necessary to adhere over the entire surface and it may adhere at a dot, linear or discontinuous condition. Further, when a matrix resin is injected and impregnated into the preform, it is preferred that the resin material adheres at a dot or linear condition, because the matrix resin is easily impregnated at such a condition. For example, the glass transition temperature of the resin material may be in a range of 0°C or higher and 95°C or lower, and the adhesion amount of the resin material may be in a range of 2 g/m² or more and 40 g/m² or less.

Where, "adhesion" means to provide the resin material to the curved reinforcing fiber substrate prior to disposition of the curved reinforcing fiber substrate, and "bonding" means to, after layering the substrates, integrate the interlayer of the substrates via the resin material. If the glass transition temperature Tg of the resin material is lower than 0°C, because it is sticky at a room temperature, the handling is hard, and if the Tg is higher than 95°C, although it is not sticky at a room temperature, it is necessary to elevate the heating temperature for bonding the substrate to each other after the substrates are layered, and the bonding becomes hard to be carried out. Where, the glass transition temperature Tg used here means a value determined by a DSC (Differential Scanning Colorimeter).

Further, in a material for a primary structural member of an airplane, in order to be hard to receive an influence due to collision of flight substances or damage by drop of a tool during repair, preferably a high residual compression strength after collision (Compression After Impact, hereinafter, referred to as "CAI") is required. Because the above-described resin material adheres to the surface of the substrate, even after molding of the fiber-reinforced composite material, it may exist between the layers, and it is likely to form the interlayer. Since this interlayer contains the resin material other than the matrix resin, in case where a high-toughness thermoplastic resin is used for the resin material, it becomes possible to make the interlayer high-toughness selectively, the CAI can be increased, and such a condition is preferred. Therefore, by optimizing the resin material, not only the adhesion but also the CAI can be improved.

If the adhesion amount of the resin material is less than 2 g/m², the adhesion amount is too little, and a sufficient adhesive property cannot be exhibited. On the other hand, if the adhesion amount is more than 10 g/m², the adhesion amount is too much, and the weight of the fiber-reinforced composite material increases and the light-weight property is injured.

In the resin material, in order to increase the CAI, if a mixture of a high-toughness thermoplastic resin and a thermosetting resin easy to adhere to the reinforcing fiber substrate and easy to bond between the substrates is used, an adhesive property to the reinforcing fiber substrate can be given while providing an appropriate toughness.

As the above-described thermoplastic resin, vinyl polyacetate, polycarbonate, polyacetal, polyphenylene oxide, polyphenylene sulfide, polyallylate, polyester, polyamide, polyamideimide, polyimide, polyetherimide, polysulfone, polyethersulfone, polyetheretherketone, polyaramide, polybenzoimidazol, polyethylene, polypropylene, cellulose acetate, etc. can be exemplified. Further, as the thermosetting resin, epoxy resin, unsaturated polyester resin, vinylester resin, phenol resin, etc. can be used.

It is important that the adhesion form of the above-described resin material to the substrate is at a dot-like, linear or discontinuous condition. In order to achieve the dot-like adhesion, it may be employed to scatter powder-form resin material on the surface of the reinforcing fiber substrate and thermally fuse it. Further, in order to achieve the linear or discontinuous adhesion, it may be employed to laminate a fabric comprising a non-woven fabric or continuous fibers onto the surface of the substrate and thereafter thermally fuse it. By such an adhesion of the resin material, the curved shape of the substrate is liable to be kept, and such a condition is preferred.

Furthermore, as aforementioned, the reinforcing fiber yarns of the curved reinforcing fiber substrate preferably contains carbon fiber yarns. By using carbon fibers, it becomes possible to exhibit high strength and stiffness after molding of a composite material. Further, although carbon fiber yarn is a raw material wherein the rigid straightness (rigidity for keeping a straight linearity) is high as compared with other kinds of reinforcing fiber yarns, and is a raw material wherein the reinforcing fiber yarns are likely to be separated from each other when the substrate is made as or formed in a curved shape, in the curved reinforcing fiber substrate, because the predetermined parallel curved arrangement formation of the reinforcing fiber yarns containing carbon fiber yarns can be maintained by the auxiliary yarns, the curved reinforcing fiber substrate becomes effective particularly in case where the reinforcing fiber yarns containing carbon fiber yarns are used. However, other fibers, for example, glass fibers or aramide fibers can be used, and a hybrid structure containing two or more kinds of reinforcing fibers can also be employed.

A curved reinforcing-fiber layered product produced according to the present invention is a layered product in which a plurality of flat-plate like reinforcing fiber layers each having a curved shape as a planar shape are layered, and is characterized in that at least one layer of the plurality of layered reinforcing fiber layers is a curved circumferentially oriented reinforcing fiber layer which is formed by a curved reinforcing fiber substrate as described above and in which a plurality of reinforcing fiber yarns are arranged in parallel to a direction along a circumferential direction of the curved shape.

In such a curved reinforcing-fiber layered product produced according to the present invention, at least one curved circumferentially oriented reinforcing fiber layer is contained in the plurality of layered flat-plate like reinforcing fiber layers, and in this curved circumferentially oriented reinforcing fiber layer, reinforcing fiber yarns are arranged in parallel to a direction (0 degree direction) along a circumferential direction of the curved shape. In the present invention, this curved circumferentially oriented reinforcing fiber layer is formed using the aforementioned curved reinforcing fiber substrate, namely, a curved reinforcing fiber substrate having a curved shape as a planar shape wherein a plurality of reinforcing fiber yarns are arranged in parallel to a direction along a circumferential direction of the curved shape, and auxiliary weft yarns are arranged in directions crossing the plurality of reinforcing fiber yarns each arranged in one direction of the circumferential direction. Therefore, in this curved circumferentially oriented reinforcing fiber layer of this layered product, a structure is employed wherein the respective reinforcing fiber yarns are arranged in parallel to a direction (0 degree direction) along a circumferential direction of the curved shape, and the arrangement formation of those reinforcing fiber yarns is maintained by the auxiliary yarns. Since the arrangement formation of the reinforcing fiber yarns is maintained by the auxiliary yarns, when this curved circumferentially oriented reinforcing fiber layer is layered to form the layered product, without breaking its layer form, a predetermined layering can be carried out easily in a short time with an excellent layering operation property. In other words, by the structure where the curved circumferentially oriented reinforcing fiber layer is formed from the stage of the reinforcing fiber substrate having the auxiliary weft yarns, the arrangement formation of the reinforcing fiber yarns in the direction (0 degree direction) along the circumferential direction of the curved shape in the layered product, namely, a desirable arrangement formation of the reinforcing fiber yarns for achieving target strength and stiffness of a fiber-reinforced composite material after molding which is relatively long and curved along the longitudinal direction, can be surely achieved and maintained, and a curved reinforcing-fiber layered product optimum for use in molding of such a long curved fiber-reinforced composite material.

By forming the curved reinforcing fiber substrate forming the curved reinforcing fiber layer by a plurality of reinforcing fiber yarn bundles, a conventional reinforcing fiber substrate arranged linearly with reinforcing fiber yarns can be used for each reinforcing fiber yarn bundle. And therefore, such a condition is preferred. On the other hand, although it is necessary to make this one layer of curved reinforcing fiber substrate forming the curved reinforcing fiber layer by disposing a plurality of reinforcing fiber yarn bundles, since a desirable curved reinforcing fiber substrate can be formed by disposing a plurality of reinforcing fiber yarn bundles on a flat plane, as compared with the conventional method for disposing reinforcing fiber yarns on a mold for forming having a three dimensional shape, a layered product and a preform can be simply formed, and thus the present invention is preferred.

Further, it is preferred that the curved reinforcing fiber substrates each comprising a plurality of reinforcing fiber yarn bundles are layered based on a predetermined layering structure, and thereafter, the substrates are bonded and integrated at positions between the substrates by using the resin material adhering to the surfaces of the substrates.

Further, because the reinforcing fiber yarn bundles of the curved reinforcing fiber substrate are not bound to each other by wefts, there is a case where it is difficult to handle it as a single substrate. Therefore, by the structure where the curved reinforcing fiber substrates are layered at a predetermined layering structure and the substrates are bonded and integrated at positions between the substrates by the resin material, the handling property is preferably improved. Further, by the integrating by bonding, preferably a shift in arrangement angle of reinforcing fiber yarns in the layered product can be suppressed, and a state at a predetermined arrangement angle can be stabilized.

Thus, differently from the conventional structure, in the curved reinforcing fiber substrate forming the curved reinforcing fiber layer, the reinforcing fiber yarns are arranged in the warp direction so as to be formed as a layer arranged with predetermined reinforcing fiber yarn bundles, and the wefts in this case are auxiliary yarns which are non-reinforcing fibers. Further, if auxiliary warp yarns are arranged together with the auxiliary weft yarns, a desired formation of NCW as aforementioned can be easily employed. The auxiliary weft yarns may keep a basic shape when a unidirectional woven fabric structure is employed.

The above-described curved circumferentially oriented reinforcing fiber layer is preferably extended over the entirety in the plane direction of the above-described curved reinforcing-fiber layered product. For example, when this curved reinforcing-fiber layered product is formed in a preform with a cross-sectional shape having a web portion and a flange portion and further molded to a fiber-reinforced composite material having the corresponding cross-sectional shape, 0°layer (a layer in which the reinforcing fiber yarns are oriented in a direction along the circumferential direction of the above-described curved shape) is preferably disposed over the entirety including the web portion and the flange portion better than disposed only in the web portion and the flange portion, and by this, target strength and stiffness are easily given to the entirety of a finally molded fiber-reinforced composite material.

Further, in the plurality of layered reinforcing fiber layers in the above-described curved reinforcing-fiber layered product, except the above-described 0°layer, further a reinforcing fiber layer can be included in which the reinforcing fiber yarns are arranged in parallel to a direction defined at an acute angle (for example, ±45°layer) relative to or perpendicular (for example, 90°layer) to the circumferential direction of the above-described curved shape. This structure includes a formation in which the an acute angle layer (for example, ±45°layer) or a perpendicular layer (for example, 90°layer) are both present. The 0°layer shoulders mainly a bending strength or a bending stiffness in the longitudinal direction after molding into a long curved fiber-reinforced composite material, and by thus including respective directional reinforcing fiber layers in the layered product other than the 0°layer, it becomes possible to increase a strength or stiffness in a direction of radius of curvature of the curved fiber-reinforced composite material or to increase a torsional stiffness, and therefore, as a whole the strength or stiffness can be increased totally, besides, it becomes possible to improve the balance of mechanical properties over the entirety.

Further, a structure can be employed wherein the above-described plurality of flat-plate like reinforcing fiber layers are integrated at the layered condition. If integrated, even if the curved reinforcing-fiber layered product is long-sized, it can be handled easily as a single material, and the transfer to the following process or the handling in the following process can also be facilitated.

The above-described integration is more preferably carried out by a structure wherein the plurality of reinforcing fiber layers are integrated by being bonded to each other, because the handling and the preparation for the integration may be much less. In particular, a formation is preferred wherein a resin material whose main component is a thermoplastic rein is provided on at least one surface of at least one layer of the reinforcing fiber layers adjacent to each other in the layering direction, and via the resin material the adjacent reinforcing fiber layers are bonded to each other. The resin material in this layered product is preferably provided to at least one surface of the reinforcing fiber layer at an adhesion amount in a range of 2 g/m² or more and 40 g/m² or less per one reinforcing fiber layer. This resin material is provided essentially for the purpose of increasing the CAI of the composite material, and the resin material is utilized for a partial bonding of the substrates (reinforcing fiber substrates) in the layered product and utilized for the entire surface bonding of the substrates in the preform. Namely, in the layered product, if the entire surface bonding is employed between the substrates (between the reinforcing fiber substrates), because the reinforcing fiber yarns cannot appropriately move similarly in the case of prepreg and the forming property deteriorates, a partial bonding is preferred in the layered product. Since a forming property is not necessary for the substrate after once formed, it is preferred to keep the preform shape by the entire surface bonding. Moreover, from the viewpoint of keeping the entire layered product at a predetermined shape, the above-described resin material provided at a dot-like or discontinuous condition is preferably used for bonding of the reinforcing fiber layers to each other over the entire surface of the reinforcing fiber layers between the reinforcing fiber layers facing to each other, and it is preferred that the resin material of one substrate is partially bonded over the entire surface of an adjacent substrate confronting to the one substrate and the maximum length of the bonded portion is 1 mm or more and the width H of the reinforcing fiber yarn or less. Namely, the layered product produced according to the present invention is preferably formed by a structure wherein a part of the resin material adhering to the entire surface of a substrate at a dot-like or discontinuous condition is integrated with, that is, bonded to the confronted substrate. As the method for partially bonding between the substrates in the layered product, bonding method, by heating only the portions to be bonded while pressing by using a jig, can be employed. The partially bonding is preferred because a good forming property is not damaged while handling as a layered product is possible. As described above, when the bonding is carried out not partially but over the entire surface between the substrates in the layered product, because the forming property is injured as compared with a case without bonding, there is a case where wrinkles occur depending upon the shape of the forming when the layered product is formed in the shape to be formed at a later process.

Further, in the above-described curved reinforcing fiber substrate in the above-described curved reinforcing-fiber layered product, as aforementioned, it is preferred that carbon fiber yarns are contained as the reinforcing fiber yarns. By using carbon fibers, high strength and stiffness can be exhibited after molding of composite material. However, other reinforcing fibers, for example, glass fibers, aramide fibers, etc, can also be used, and a hybrid structure containing two or more kinds of reinforcing fibers can also be employed.

The process for producing a curved reinforcing-fiber layered product produced according to the present invention by layering a plurality of flat-plate like reinforcing fiber layers each having a curved shape as a planar shape, comprises the steps of forming a curved circumferentially oriented reinforcing fiber layer, in which a plurality of reinforcing fiber yarns are arranged in parallel to a direction along a circumferential direction of the curved shape, using the aforementioned curved reinforcing fiber substrate; and layering the curved circumferentially oriented reinforcing fiber layer as at least one layer among a plurality of reinforcing fiber layers to be layered.

Namely, by using a curved circumferentially oriented reinforcing fiber layer formed by using a curved reinforcing fiber substrate with auxiliary weft yarns as at least one layer among reinforcing fiber layers to be layered in order, a curved reinforcing-fiber layered product with excellent properties as aforementioned can be produced.

When the above-described curved circumferentially oriented reinforcing fiber layer is formed, a method is employed wherein a plurality of unidirectional reinforcing fiber yarn bundles each with a predetermined width (for example, a plurality of tape-like unidirectional reinforcing fiber yarn bundles each with a predetermined width) are prepared by cutting a unidirectional reinforcing fiber woven fabric, formed from reinforcing fiber yarn groups each arranged with a plurality of continuous reinforcing fiber yarns in one direction in parallel to each other and auxiliary yarns extending in a direction crossing the reinforcing fiber yarns and bundling a plurality of the reinforcing fiber yarn groups, so as to contain a part of the reinforcing fiber yarn groups and so as to be in parallel to the reinforcing fiber yarn groups, and the plurality of unidirectional reinforcing fiber yarn bundles are arranged by a predetermined number at a condition adjacent to each other in a direction along the circumferential direction of the curved shape, until the planar shape of the curved circumferentially oriented reinforcing fiber layer is completed. Although the unidirectional reinforcing fiber yarn bundle preferably has a rectangular cross-sectional shape, a cross section other than a rectangle may be employed. Namely, this method is a method for preparing a plurality of unidirectional reinforcing fiber yarn bundles each with a predetermined width beforehand, and arranging them in order at a condition adjacent to each other so as to be able to form a flat plate-like curved shape having a predetermined width.

Further, when at least one layer among the reinforcing fiber layers to be layered different from the above-described curved circumferentially oriented reinforcing fiber layer is formed, a method is employed wherein a plurality of orthogonally cut unidirectional reinforcing fiber yarn bundles are prepared by cutting a unidirectional reinforcing fiber woven fabric, formed from reinforcing fiber yarn groups each arranged with a plurality of continuous reinforcing fiber yarns in one direction in parallel to each other and auxiliary yarns extending in a direction crossing the reinforcing fiber yarns and bundling a plurality of the reinforcing fiber yarn groups, in a direction perpendicular to the reinforcing fiber yarns, and the plurality of orthogonally cut unidirectional reinforcing fiber yarn bundles are disposed in a direction along a circumferential direction of the curved shape so that reinforcing fiber yarns of respective yarn bundles extend in a radial direction of the curved shape, and are disposed while deforming them so that in the outer-side portion in the curved shape, the gap between the reinforcing fiber yarns adjacent to each other is enlarged, and in the inner-side portion in the curved shape, the gap between the reinforcing fiber yarns adjacent to each other is smallened. Namely, in case where orthogonally cut unidirectional reinforcing fiber yarn bundles each having a certain width are disposed in order in a direction along a circumferential direction of the curved shape so that the reinforcing fiber yarns extend in a radial direction of the curved shape, if merely disposed as they are, because there exists a difference in circumferential length between the outer-side portion and the inner-side portion in the curved shape, there is a fear that in the outer-side portion, a relatively large gap may occur between the adjacent yarn bundles, and in the inner-side portion, the adjacent yarn bundles may overlap to each other. Accordingly, as described above, by the disposition of the yarn bundles while deforming the yarn bundles so that in the outer-side portion in the curved shape, the gap between the reinforcing fiber yarns is enlarged, and in the inner-side portion in the curved shape, the gap between the reinforcing fiber yarns is smallened, such a fear can be removed, and although the disposition density of reinforcing fiber yarns has a difference, the reinforcing fiber yarns can exist so as to form a layered formation without a rift over the entirety within the curved shape.

Further, when at least one layer among the reinforcing fiber layers to be layered different from the above-described curved circumferentially oriented reinforcing fiber layer is formed, a method is employed wherein a plurality of orthogonally cut unidirectional reinforcing fiber yarn bundles are prepared by cutting a unidirectional reinforcing fiber woven fabric, formed from reinforcing fiber yarn groups each arranged with a plurality of continuous reinforcing fiber yarns in one direction in parallel to each other and auxiliary yarns extending in a direction crossing the reinforcing fiber yarns and bundling a plurality of the reinforcing fiber yarn groups, in a direction perpendicular to the reinforcing fiber yarns, and the plurality of orthogonally cut unidirectional reinforcing fiber yarn bundles are disposed in a direction along a circumferential direction of the curved shape so that reinforcing fiber yarns of respective yarn bundles extend in a radial direction of the curved shape, and are disposed so that in the outer-side portion in the curved shape, a gap is provided between the above-described orthogonally cut unidirectional reinforcing fiber yarn bundles adjacent to each other, and in the inner-side portion in the curved shape, the gap between the orthogonally cut unidirectional reinforcing fiber yarn bundles adjacent to each other is smallened. Namely, in case where a gap is obliged to be generated between adjacent orthogonally cut unidirectional reinforcing fiber yarn bundles by a difference in circumferential length between the outer-side portion and the inner-side portion in the curved shape, by smallening the gap in the inner-side portion in the curved shape as much as possible, preferably by achieving a condition in the inner-side portion in the curved shape where the edges of adjacent orthogonally cut unidirectional reinforcing fiber yarn bundles come into contact with each other, the functions to be exhibited by the orthogonally cut unidirectional reinforcing fiber yarn bundles for improving strength, stiffness, etc. can be exhibited as much as possible.

The above-described device on disposition of orthogonally cut unidirectional reinforcing fiber yarn bundles can also be applied to a reinforcing fiber layer in which reinforcing fibers are oriented in an oblique direction other than the radial direction (0°direction) of the curved shape. For example, a method is employed wherein, when at least one layer among the reinforcing fiber layers to be layered different from the above-described curved circumferentially oriented reinforcing fiber layer is formed, a plurality of acute-angle cut unidirectional reinforcing fiber yarn bundles are prepared by cutting a unidirectional reinforcing fiber woven fabric, formed from reinforcing fiber yarn groups each arranged with a plurality of continuous reinforcing fiber yarns in one direction in parallel to each other and auxiliary yarns extending in a direction crossing the reinforcing fiber yarns and bundling a plurality of the reinforcing fiber yarn groups, in a direction defined at a predetermined acute angle relative to the reinforcing fiber yarns, and the plurality of acute-angle cut unidirectional reinforcing fiber yarn bundles are disposed in a direction along a circumferential direction of the curved shape so that reinforcing fiber yarns of respective yarn bundles extend in a direction defined at a predetermined angle relative to a radial direction of the curved shape, and are disposed while deforming them so that in the outer-side portion in the curved shape, the gap between the reinforcing fiber yarns adjacent to each other is enlarged, and in the inner-side portion in the curved shape, the gap between the reinforcing fiber yarns adjacent to each other is smallened.

Further, a method is employed wherein, when at least one layer among the reinforcing fiber layers to be layered different from the above-described curved circumferentially oriented reinforcing fiber layer is formed, a plurality of acute-angle cut unidirectional reinforcing fiber yarn bundles are prepared by cutting a unidirectional reinforcing fiber woven fabric, formed from reinforcing fiber yarn groups each arranged with a plurality of continuous reinforcing fiber yarns in one direction in parallel to each other and auxiliary yarns extending in a direction crossing the reinforcing fiber yarns and bundling a plurality of the reinforcing fiber yarn groups, in a direction defined at a predetermined acute angle relative to the reinforcing fiber yarns, and the plurality of acute-angle cut unidirectional reinforcing fiber yarn bundles are disposed in a direction along a circumferential direction of the curved shape so that reinforcing fiber yarns of respective yarn bundles extend in a direction defined at a predetermined angle relative to a radial direction of the curved shape, and are disposed so that in the outer-side portion in the curved shape, a gap is provided between the above-described acute-angle cut unidirectional reinforcing fiber yarn bundles adjacent to each other, and in the inner-side portion in the curved shape, the gap between the acute-angle cut unidirectional reinforcing fiber yarn bundles adjacent to each other is smallened.

A preform described herein has a formation of a curved reinforcing-fiber layered product layered with a plurality of plate-like reinforcing fiber layers each having a curved shape, wherein at least one curved circumferentially oriented reinforcing fiber layer, which is formed by using the aforementioned curved reinforcing fiber substrate and in which reinforcing fiber yarns are arranged in parallel to a direction along a circumferential direction of the curved shape, and a reinforcing fiber layer in which reinforcing fiber yarns are arranged in parallel to a direction along a radial direction of the curved shape and/or a reinforcing fiber layer in which reinforcing fiber yarns are arranged in parallel to a direction defined at an acute angle relative to a circumferential direction of the curve shape, are included in the plurality of layered reinforcing fiber layers, and the curved reinforcing-fiber layered product is formed in a shape which has a flange portion bent along a circumferential edge of the curved shape as viewed in a section of a transverse direction of the layered product perpendicular to a longitudinal direction of the layered product. Namely, it is a preform in which the plate-like dry curved reinforcing-fiber layered product formed by using the aforementioned curved reinforcing fiber substrates is a layered product formed in a cross-sectional shape having a flange portion, and which is formed as an intermediate product for molding a fiber-reinforced composite material having a predetermined long-sized curved shape.

In the above-described flange portion, similarly in the aforementioned curved reinforcing-fiber layered product, the curved circumferentially oriented reinforcing fiber layer is preferably formed by a structure where a plurality of the tape-like reinforcing fiber yarn bundles each arranged with the reinforcing fiber yarns in parallel to a direction along the circumferential direction of the curved shape are arranged in the radial direction of the curved shape so as to be adjacent to each other.

Further, although the above-described flange portion can be formed only at one side in the transverse direction of the above-described curved reinforcing-fiber layered product, in case where it is formed at each side of the curved reinforcing-fiber layered product, a structure can be employed wherein, among both flange portions, a flange portion bent along a circumferential edge of the curved shape with a larger radius of curvature of the curved shape is divided into a plurality of flange portions in the longitudinal direction of the layered product, and a space is defined between adjacent divided flange portions. In such a structure, even if there is a fear that wrinkles may be generated in the flange portion larger in radius of curvature at the time of bending, because there exist spaces between the respective divided flange portions, a condition with no wrinkles can be maintained, and a predetermined good cross-sectional shape can be kept.

Further, in order to keep the predetermined cross-sectional shape when formed to a preform, the above-described plurality of plate-like reinforcing fiber layers, which are materials for a preform to be formed, are preferably integrated by being bonded to each other via the resin material, whose main component is a thermoplastic resin, provided at a dot-like, linear or discontinuous condition between the reinforcing fiber layers adjacent to each other in the layering direction. The preferable providing form of this resin material is as aforementioned. After the layered product produced according to the present invention is formed to a predetermined preform shape, it is preferred that the reinforcing fiber substrates are bonded to and integrated with each other over the entire surface in order to keep the shape of the preform. By keeping the shape of the preform, conveying of the preform is facilitated, and it can be placed at a high accuracy in a mold for molding operation which is different from a mold for forming operation.

A process for producing a preform, which does not fall under the scope of the present invention comprises the steps of: as a plurality of flat-plate like reinforcing fiber layers each having a curved shape as a planar shape, preparing a curved circumferentially oriented reinforcing fiber layer, which is formed by using the aforementioned curved reinforcing fiber substrate and in which reinforcing fiber yarns are arranged in parallel to a direction along a circumferential direction of the curved shape, and a reinforcing fiber layer in which reinforcing fiber yarns are arranged in parallel to a direction along a radial direction of the curved shape and/or a reinforcing fiber layer in which reinforcing fiber yarns are arranged in parallel to a direction defined at an acute angle relative to a circumferential direction of the curve shape; preparing a curved reinforcing-fiber layered product by layering the prepared plurality of reinforcing fiber layers at a predetermined layering order; and forming the curved reinforcing-fiber layered product in a shape, which has a flange portion, by bending the layered product along a circumferential edge of the curved shape, as viewed in a section of a transverse direction of the layered product perpendicular to a longitudinal direction of the layered product.

In this process, the form of the preform can be fixed at a condition formed with the above-described flange portion, for example, by heating the above-described curved reinforcing-fiber layered product for a predetermined time and bonding the substrates to each other via the resin material. By fixing the form of the preform by heating, the preform as a whole becomes easy to be handled, occurrence of local disorder of the reinforcing fibers can be prevented, and a good uniformity of mechanical properties can be secured when molded finally to a fiber-reinforced composite material.

Further, also in the above-described process, a preform with a C shape or a Z shape in cross section can be produced by bending and forming the above-described flange portion at each side in the transverse direction of the curved reinforcing-fiber layered product. Further, in this case, it is preferred that, among flange portions to be bent and formed at both sides in the transverse direction of the curved reinforcing-fiber layered product, a flange portion to be bent and formed along the circumferential edge of the curved shape at a side with a larger radius of curvature of the curved shape is divided into a plurality of flange forming portions, and spaces are defined between the divided flange forming portions, and thereafter, the shape with a flange portion is formed by bending the respective divided flange forming portions. Thus, by forming divided spaces in advance, wrinkles become hard to be generated when the flange portion is bent and formed along the circumferential edge of the curved shape at the side with a larger radius of curvature, and a desirable flange portion can be easily bent and formed. In case where flange portions are bent and formed at both sides in the transverse direction of the curved reinforcing-fiber layered product, by first forming the flange portion not provided with the above-described spaced and thereafter forming the flange portion provided with the spaces, occurrence of wrinkles can be suppressed more efficiently.

Further, the above-described flange portion can be bent and formed, for example, by placing the above-described curved reinforcing-fiber layered product on a mold for forming having a predetermined shape, covering a sheet with a flexibility onto the curved reinforcing-fiber layered product and closing the curved reinforcing-fiber layered product at a sealed condition, reducing in pressure the inside of the sheet and pressing the curved reinforcing-fiber layered product toward the mold along the mold with the sheet by utilizing a pressure difference between the inside and the outside of the sheet. For the preform, it is also preferred to bond and integrate the reinforcing fiber substrates to each other over the entire surface by heating at the condition pressing the curved reinforcing-fiber layered product.

Alternatively, the above-described flange portion can also be bent and formed by placing the above-described curved reinforcing-fiber layered product in a double-surface mold having a predetermined shape, and pressing the curved reinforcing-fiber layered product in the double-surface mold. Also in this case, for the preform, it is also preferred to bond and integrate the reinforcing fiber substrates to each other over the entire surface by heating at the condition pressing the curved reinforcing-fiber layered product.

Furthermore, the above-described flange portion can also be bent and formed by providing bladders capable of being independently operated in expansion and contraction at both sides of a mold for forming having a predetermined shape, respectively, placing the curved reinforcing-fiber layered product on the mold, and forming the respective portions of the placed curved reinforcing-fiber layered product corresponding to the positions of the respective bladders to the shapes along the mold by the expansion and contraction operations of the respective bladders.

In this method using bladders, because the bladders are provided at both sides of the mold and the respective bladders can be independently operated in expansion and contraction, the forming directions relative to the mold of the respective portions of the curved reinforcing-fiber layered product placed on the mold, corresponding to the positions of the respective bladders, are not restricted, and the timings for forming also are not restricted. Therefore, the forming becomes possible in any case of a case where flange portions are required to be bent and formed in the same direction such as in a forming into C-shaped section and a case where flange portions are required to be bent and formed in directions different from each other such as in a forming into Z-shaped section. Further, by disordering the timings of the expansion/contraction operations of the bladders disposed at both sides, even if wrinkles or other inconveniences are to be generated in the reinforcing-fiber layered product before forming at the time of forming due to the expansion operation of one-side bladder, it becomes possible to form the layered product while expanding the layered product so as to remove the wrinkles or other inconveniences at the time of forming due to the expansion operation of the other-side bladder, and therefore, it becomes possible to carry out the forming smoothly and easily to a desirable shape at a target quality. Thus, by controlling the order of the expansion operations of the bladders, the respective portions of the curved reinforcing-fiber layered product corresponding to the positions of the respective bladders can be formed in order, thereby suppressing occurrence of inconveniences such as wrinkles at the time of forming.

Of course, it is possible to simultaneously form the respective portions of the curved reinforcing-fiber layered product corresponding to the positions of the respective bladders, and in case where there is no fear or little of occurrence of inconveniences such as wrinkles, the time for forming can be shortened by such a simultaneous forming.

Further, although the curved reinforcing-fiber layered product can be formed by using a single mold, it is also possible to form the curved reinforcing-fiber layered product by nipping it between molds and form the portions extending at both sides of the molds by the expansion operations of respective bladders. By nipping the curved reinforcing-fiber layered product between the molds, even when the respective portions of the layered product are formed, the whole of the layered product can be held at a predetermined posture, and the accuracy of the forming to a predetermined shape is improved.

The forming basically may be carried out by pressing the predetermined portion of the curved reinforcing-fiber layered product to a corresponding portion of the mold so as to become a shape along the mold.

Further, with respect to the expansion operations of the bladders, at least the bladders are contained in a chamber capable of being closed at a sealed condition, and the respective bladders can be expanded by reducing in pressure the inside of the chamber. In this case, for example, a manner can be employed wherein atmospheric air is introduced into the respective bladders when the inside of the chamber is reduced in pressure. Namely, the atmospheric air can be introduced into the bladders utilizing a pressure difference between the pressure reduced chamber inner pressure and the atmospheric pressure.

Alternatively, the respective bladders can also be expanded by introducing a pressurized fluid into the respective bladders. In this case, the above-described chamber capable of being reduced in pressure is not necessary. Whether utilizing the atmospheric pressure or introducing the pressurized fluid may be appropriately decided depending upon the characteristics or the size of the reinforcing fiber substrate to be formed.

Further, the above-described forming operation can also be carried out in order in the longitudinal direction of the curved reinforcing-fiber layered product. For example, a method can be employed wherein, after the layered product is formed by a predetermined length in the longitudinal direction, the layered product is pulled out and its position relative to the forming device is shifted, and the adjacent portion in the longitudinal direction is successively formed. In this method, because it is difficult to hold the airtight condition of the vacuum chamber, a method for introducing the pressurized fluid is employed more preferably. In particular, it is effective for a case where the curved reinforcing-fiber layered product to be formed is long-sized, and by a small-sized forming device, a long-sized curved reinforcing-fiber layered product can be formed at a predetermined shape in order.

In such a forming operation by bladders, by shifting the timing of the forming operation in accordance with the portion to be formed and controlling the order of the forming, it becomes possible to suppress occurrence of wrinkles, or generate wrinkles on a portion out of the shape of a final product, thereby suppressing occurrence of wrinkles within the final product, or disperse wrinkles, thereby suppressing occurrence of wrinkles, etc., and a forming operation at a good quality becomes possible.

In such a method using bladders, as the device used, basically a drive system is not required or a large-scaled drive system is not necessary, it can be constructed by a simple and inexpensive device structure, and only by expansion/contraction operations of bladders operable independently, even for a cross-sectional shape whose directions to be bent for forming are different from each other such as Z shaped section other than C shaped section, further, even for a shape having a portion curved in the longitudinal direction as in the present invention, a desirable\shape forming can be carried out smoothly and easily without generating problems such as wrinkles.

A process for producing a fiber-reinforced resin composite material not in accordance with the present invention comprises the steps of: as a plurality of flat-plate like reinforcing fiber layers each having a curved shape as a planar shape, preparing a curved circumferentially oriented reinforcing fiber layer, which is formed by using the aforementioned curved reinforcing fiber substrate and in which reinforcing fiber yarns are arranged in parallel to a direction along a circumferential direction of the curved shape, and a reinforcing fiber layer in which reinforcing fiber yarns are arranged in parallel to a direction along a radial direction of the curved shape and/or a reinforcing fiber layer in which reinforcing fiber yarns are arranged in parallel to a direction defined at an acute angle relative to a circumferential direction of the curve shape; preparing a curved reinforcing-fiber layered product by layering the prepared plurality of reinforcing fiber layers at a predetermined layering order; forming the curved reinforcing-fiber layered product as a preform having a shape, which has a flange portion, by bending the layered product along a circumferential edge of the curved shape, as viewed in a section of a transverse direction of the layered product perpendicular to a longitudinal direction of the layered product; impregnating a resin into the formed preform; and curing the impregnated resin.

In this process, for example, at the condition where the above-described flange portion is formed, the above-described curved reinforcing-fiber layered product is heated for a predetermined time and the formed condition of the preform is fixed, and thereafter, the resin can be impregnated. By fixing the formed condition of the preform via bonding due to the resin material by heating, the formation can be prevented from being damaged even at the time of resin impregnation, and a fiber-reinforced resin composite material having a finally targeted shape can be obtained at a high accuracy.

Further, for molding the fiber-reinforced resin composite material, a method can be employed wherein the above-described formed preform is placed on a mold, the preform is covered with a bagging material and the inside is closed at a sealed condition, the sealed inside is reduced in pressure by evacuation and the resin is injected into the pressure-reduced inside, the injected resin is impregnated into the preform, and the impregnated resin is cured.

Alternatively, for molding the fiber-reinforced resin composite material, a method can also be employed wherein the above-described formed preform is placed in a double-surface mold, a resin is injected into the mold, the injected resin is impregnated into the preform, and the impregnated resin is cured.

A fiber-reinforced resin composite material not falling under the scope of the present invention is produced by the above-described process.

The fiber-reinforced resin composite material is suitable particularly for a long-scaled curved structural body required with a light-weight property, for example, suitable as a body frame of an airplane.

### Effect according to the Invention

A curved reinforcing fiber substrate curved along the longitudinal direction at a predetermined shape and oriented precisely with reinforcing fibers along the curved shape at a desirable formation is provided. By using this curved reinforcing fiber substrate as at least one reinforcing fiber layer and layering a plurality of reinforcing fiber layers, a dry curved reinforcing-fiber layered product oriented with reinforcing fibers precisely at a desirable formation as a whole can be provided. Further, a process for producing a curved reinforcing-fiber layered product according to the present invention is capable of producing such a curved reinforcing-fiber layered product with a desirable formation efficiently for a short time.

Further, by using the above-described curved reinforcing-fiber layered product, a preform having a flange portion and the like and precisely formed in a predetermined cross-sectional shape can be provided. Further, a process for producing a preform capable of forming such a preform with a desirable formation efficiently in a predetermined cross-sectional shape for a short time can be provided. Further, a process for producing a preform can also be provided which, using a device with a simple structure and capable of being constructed inexpensively, such a preform with a desirable formation can be formed as preform with a predetermined cross-sectional shape smoothly and easily without generating problems such as wrinkles, even for a sectional shape for forming whose directions to be bent are different from each other such as Z shaped section other than C shaped section.

Further, a relatively long-sized fiber-reinforced composite material molded precisely at a targeted shape curved along the longitudinal direction by using the above-described preform, and a process for producing the same, can be provided. In particular, a long-sized curved fiber-reinforced composite material suitable as a body frame of an airplane, etc. can be provided inexpensively and at a condition suitable for mass production.

Furthermore, in the long-sized fiber-reinforced composite material having a shape curved along the longitudinal direction, a fiber-reinforced composite material arranged with all reinforcing fibers in desirable directions determined by referring the circumferential direction of the curved shape as a reference direction (0°direction), and a process for producing the same, can be provided. Then, by arranging 0°oriented reinforcing fibers along the circumferential direction of the curved shape, the properties in the circumferential direction can be improved, and in any position in circumferential direction, a same layered structure substantially relative to the circumferential direction of the curved shape can be achieved.

### Brief explanation of the drawings

Fig. 1 is a schematic plan view of a curved reinforcing fiber substrate.
Fig. 2 is a schematic plan view showing an example for making a curved reinforcing fiber substrate.
Fig. 3 is a schematic plan view showing an example for making a 90°oriented curved reinforcing fiber substrate.
Fig. 4 is a schematic plan view showing an example for making an acute-angle oriented curved reinforcing fiber substrate.
Fig. 5 shows schematic diagrams of conventional reinforcing fiber substrates for comparison, (A) shows a 0°oriented substrate, (B) shows a 90°oriented substrate, and (C) shows a 45°oriented substrate.
Fig. 6 is a schematic diagram showing an example in case where a curved substrate is cut out from a conventional 0°oriented reinforcing fiber substrate.
Fig. 7 is a plan view showing an example for actually making a curved circumferentially oriented reinforcing fiber substrate.
Fig. 8 is a plan view showing another example for actually making a curved circumferentially oriented reinforcing fiber substrate.
Fig. 9 is a plan view showing an example for actually making an acute-angle oriented reinforcing fiber substrate.
Fig. 10 is a partial perspective view of a unidirectional reinforcing fiber woven fabric showing an example for providing resin material for bonding.
Fig. 11 is an exploded plan view of respective reinforcing fiber layers of a curved reinforcing-fiber layered product.
Fig. 12 is a perspective view of a preform.
Fig. 13 is a perspective view of a preform.
Fig. 14 is a perspective view of a preform.
Fig. 15 is a schematic sectional view of a forming device showing an example for forming a preform using an elastic sheet, and (A)-(C) show an order of the forming.
Fig. 16 is a schematic sectional view of a forming device showing an example for forming a preform using bladders, and (A)-(C) show an order of the forming.
Fig. 17 is a perspective view showing an example of a preform.
Fig. 18 is a perspective view showing another example of a preform.
Fig. 19 is a schematic perspective view of a molding device showing a process for producing a curved fiber-reinforced resin composite material.
Fig. 20 is a schematic perspective view of a molding device showing a process for producing a curved fiber-reinforced resin composite material.
Fig. 21 is a schematic perspective view of a weaving machine for a curved reinforcing fiber substrate used in Example 1.
Fig. 22 is a schematic plan view of a curved reinforcing-fiber layered product having notches made in Example 5.
Fig. 23 is a diagram observing a reinforcing fiber layer made in Comparative Example 1.
Fig. 24 is a perspective view showing a typical formed shape of reinforcing fiber substrate in a developed technology using bladders.
Fig. 25 is a perspective view showing another typical formed shape of reinforcing fiber substrate (a case having a curved portion) in the developed technology.
Fig. 26 is a perspective view showing a further typical formed shape of reinforcing fiber substrate (a case having a curved portion and slits) in the developed technology.
Fig. 27 is a perspective view showing a still further typical formed shape of reinforcing fiber substrate (a case having a curved portion and slits) in the developed technology.
Fig. 28 is a schematic sectional view of a forming device showing an example of forming in the developed technology.
Fig. 29 is a schematic sectional view of the forming device showing a next step of Fig. 28.
Fig. 30 is a schematic sectional view of the forming device showing a next step of Fig. 29.

### Explanation of symbols

1: curved reinforcing fiber substrate
2: reinforcing fiber yarn
3: circumferential direction of curved shape
4: auxiliary weft yarn
5: auxiliary warp yarn
11: tape-like reinforcing fiber yarn bundle
12: curved tape-like reinforcing fiber yarn bundle
13: 0°oriented curved reinforcing fiber substrate
21: reinforcing fiber yarn bundle
22: sector-like reinforcing fiber yarn bundle
23: 90°oriented curved reinforcing fiber substrate
24: gap between reinforcing fiber yarns
25: inner side in radial direction of curved shape
26: outer side in radial direction of curved shape
27: gap between reinforcing fiber yarn bundles
31: reinforcing fiber yarn bundle
32: deformed reinforcing fiber yarn bundle
33: acute-angle oriented curved reinforcing fiber substrate
34: gap between reinforcing fiber yarns
35: inner side in radial direction of curved shape
36: outer side in radial direction of curved shape
37: gap between reinforcing fiber yarn bundles
41a: 0°oriented substrate
41b: 90°oriented substrate
41c: 45°oriented substrate
42: curved substrate
51: 0°oriented curved reinforcing fiber substrate
52: 0°oriented curved reinforcing fiber substrate
53: acute-angle oriented curved reinforcing fiber substrate
61: unidirectional reinforcing fiber woven fabric
62: reinforcing fiber yarn
63: auxiliary weft yarn
64: auxiliary warp yarn
65: resin material
71: curved reinforcing-fiber layered product
72, 72a, 72b, 72c, 72d: reinforcing fiber layer
81, 91, 101: preform
82a, 82b, 92a, 92b, 102a, 102b: flange portion
83, 93, 104: web portion
102a': divided flange portion
103: space
111: mold for forming
112: curved reinforcing-fiber layered product
113: elastic sheet
114: sealant
115: vacuum evacuation means
116: atmospheric pressure
117: preform with C shaped section
118: flow path of heat medium
121: chamber
122, 123: mandrel as mold
124: curved reinforcing-fiber layered product
125, 126: bladder
127: atmospheric air
128: one end portion of layered product
129: the other end portion of layered product
130: preform with Z shaped section
131, 132, 141, 151: preform
142: mold
143: bagging material
152: lower mold
153: upper mold
154: mold formed as double-surface mold
161: weaving machine for curved reinforcing fiber substrate
162: 0°oriented curved reinforcing fiber substrate
163: reinforcing fiber yarn
164: auxiliary warp yarn
165, 166: heald
167: reed
168: auxiliary weft yarn
169: weft yarn threading mechanism
170, 171, 172: mandrel
173: resin material scattering device
174: resin particle
175: seating
181: curved reinforcing fiber substrate
182: notch
191: reinforcing fiber layer
192: wave
201, 211, 221, 231: reinforcing fiber substrate after forming
202, 212, 222, 232: web portion
203, 204, 213, 214, 223, 224, 233, 234: flange portion
225, 235: slit
241: chamber
242, 243: mandrel as mold
244: layered product as reinforcing fiber substrate
245, 246: bladder
247: atmospheric air
248: one end portion of layered product
249: the other end portion of layered product
250: preform with Z shaped section

### The Best mode for carrying out the Invention

Hereinafter, the present invention will be explained in more detail referring to figures, together with desirable embodiments.

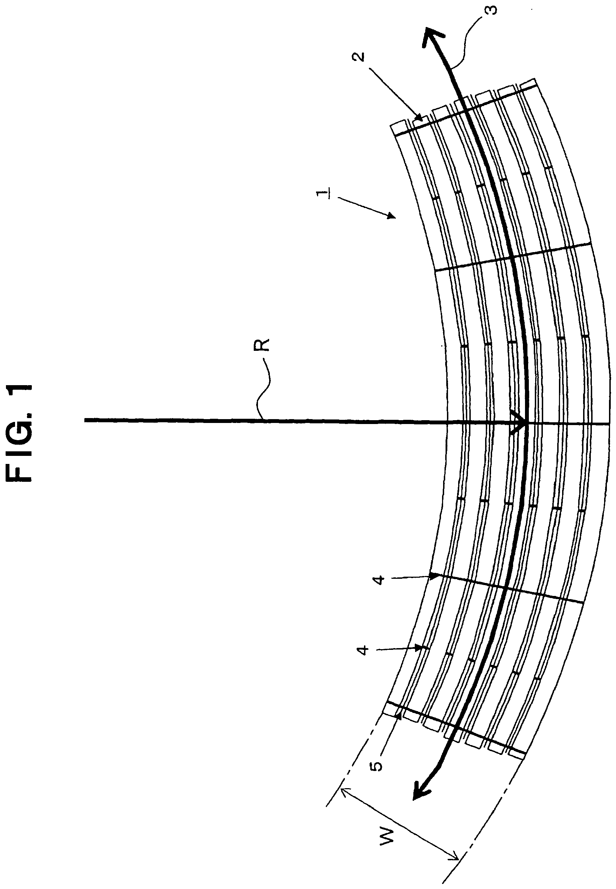

Fig. 1 shows a curved reinforcing fiber substrate 1. In curved reinforcing fiber substrate 1 shown in Fig. 1, the planar shape is formed as a curved shape with a width W and a radius of curvature R, a plurality of (in the example shown in the figure, seven) reinforcing fiber yarns 2 are arranged in a direction along the circumferential direction 3 of this curved shape (0°direction), and auxiliary weft yarns 4 are arranged in a direction crossing the plurality of reinforcing fiber yarns 2 arranged in one direction of the circumferential direction (in the example shown in the figure, in a direction perpendicular to the circumferential direction 3 of the curved shape (90°direction)). Although basically the predetermined curved form of the plurality of reinforcing fiber yarns 2 is kept by auxiliary weft yarns 4, auxiliary warp yarns 5 are arranged in a direction in parallel to reinforcing fiber yarns 2, these auxiliary warp yarns 5 and the above-described auxiliary weft yarns 4 are preferably entangled with each other, and the predetermined curved form of the plurality of reinforcing fiber yarns 2 is kept by both auxiliary yarns 4 and 5. Such a curved reinforcing fiber substrate 1 can be formed as a form with a predetermined curved shape, for example, by arranging the plurality of reinforcing fiber yarns 2 in parallel and arranging auxiliary weft yarns 4, and at such a condition, winding out it so as to be along the radius of curvature R of the curved shape by using a taper roller, etc.

The numbers of the reinforcing fiber yarns and the weft yarns are not particularly limited. Further, as to the radius of curvature R, although in Fig. 1 the curvature at the center in the transverse direction of the curved reinforcing fiber substrate is shown, based on a predetermined design, the radius of curvature R can also be set at any of both end portions of the substrate in its transverse direction or at any position in the transverse direction. Further, the radius of curvature R of the curved reinforcing fiber substrate is preferably 1 m or more. More preferably, it is 2 m or more. If the radius of curvature R is less than 1 m, folding, wrinkles by snaking, etc. of the reinforcing fiber yarns or the reinforcing fiber yarn bundles are liable to occur, and therefore, such a condition is not preferable. On the other hand, although the present invention can be applied even if the radius of curvature R becomes 10 m or more, the greater the radius of curvature R becomes, the more closely the arrangement of the reinforcing fiber yarns approaches to a linear condition, and therefore, the advantage according to the present invention becomes smaller. For example, when a case is supposed where the present invention is applied to production of a structural member for a body of an airplane, a range of about 1 to 7 m is required as the radius of curvature R of the structural member, and in case of such a range of radius of curvature R, the present invention can be applied at an optimum condition.

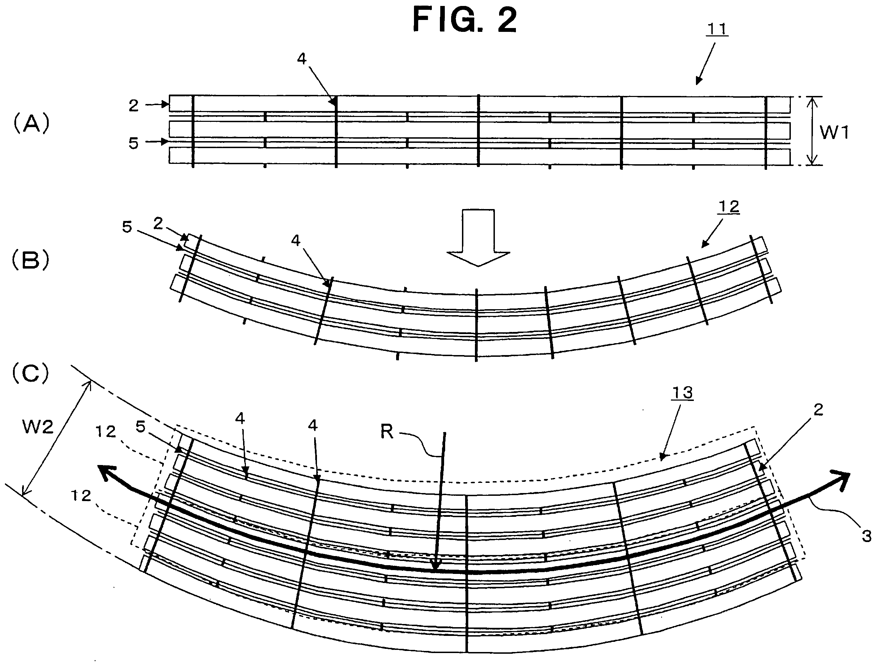

The above-described curved reinforcing fiber substrate can be made more easily by the arrangement of the reinforcing fiber yarn bundles, for example, as shown in Fig. 2. For example, as shown in Fig. 2 (A), a plurality of reinforcing fiber yarns 2 are arranged in one direction in parallel to each other so as to extend linearly, and a unidirectional reinforcing fiber woven fabric having auxiliary weft yarns 4 and auxiliary warp yarn 5 is cut in a direction along the reinforcing fiber yarns 2, namely, in a direction cutting the auxiliary weft yarns 4, thereby preparing a plurality of tape-like reinforcing fiber yarn bundles 11 each with a predetermined relatively small width (with a width W1). Next, as shown in Fig. 2 (B), each tape-like reinforcing fiber yarn bundle 11 is curved at a predetermined radius of curvature and formed as a curved tape-like reinforcing fiber yarn bundle 12. Then, as shown in Fig. 2 (C), by arranging a predetermined number of curved tape-like reinforcing fiber yarn bundles 12 so as to be adjacent to each other in the radial direction of the curved shape, a 0°oriented curved reinforcing fiber substrate 13 can be completed which has a targeted width W2 as the planar shape and has a curved shape with a target radius of curvature R, and in which respective reinforcing fiber yarns 2 extend in parallel to each other along the circumferential direction 3 of the curved shape and a target formation of reinforcing fiber yarns 2 arranged in parallel to each other in 0°direction (the circumferential direction 3 of the curved shape) is achieved.

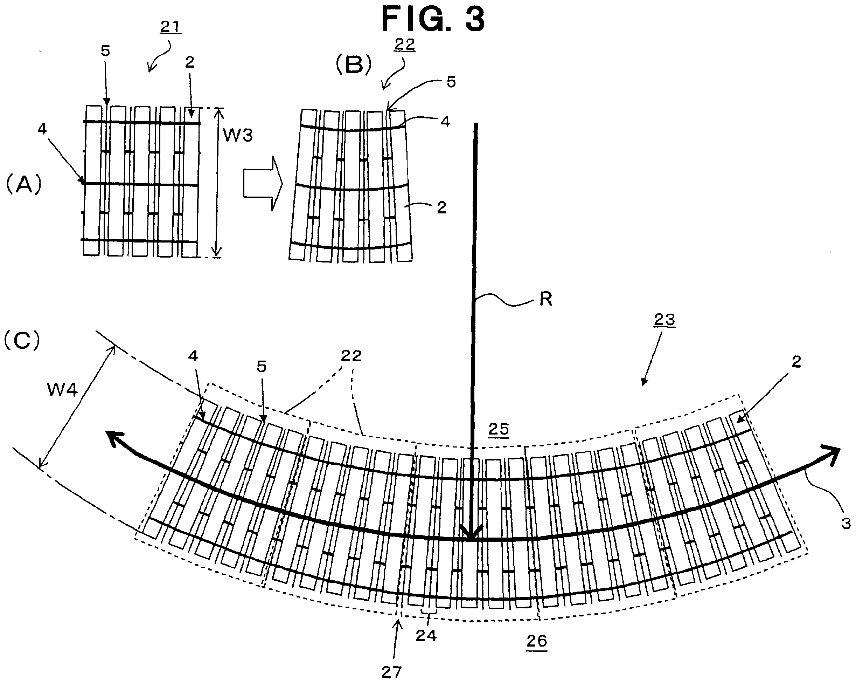

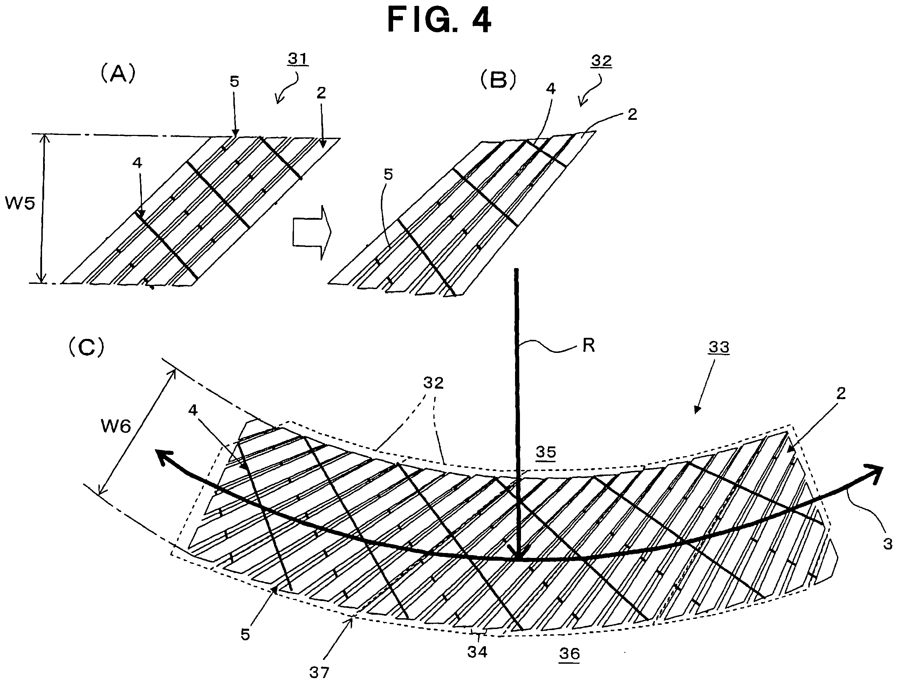

In the curved reinforcing-fiber layered product produced according to the present invention and described later, a plurality of flat-plate like reinforcing fiber layers each having a curved shape with a radius of curvature R as the planar shape are layered, as at least one layer of the plurality of the reinforcing fiber layers to be layered, the above-described curved reinforcing fiber substrate, in which the reinforcing fiber yarns extend in parallel to each other along the circumferential direction of the curved shape, is used, and as the remaining reinforcing fiber layers, for example, as shown in Fig. 3 or Fig. 4, a curved reinforcing fiber substrate, in which the reinforcing fiber yarns extend in parallel to each other in a different direction, can be used.

The curved reinforcing fiber substrate shown in Fig. 3 is made, for example, as follows. For example, as shown in Fig. 3 (A), a plurality of reinforcing fiber yarns 2 are arranged in one direction in parallel to each other so as to extend linearly, and a unidirectional reinforcing fiber woven fabric with a predetermined width having auxiliary weft yarns 4 and auxiliary warp yarn 5 is cut in a direction perpendicular to the reinforcing fiber yarns 2, thereby preparing a plurality of relatively small-width (width W3) reinforcing fiber yarn bundles 21 each with a predetermined width and a predetermined length. If such an orthogonally cut reinforcing fiber yarn bundle 21 with a rectangular shape is left as it is, because a curved shape cannot be formed as a whole even if a plurality of them are arranged, as shown in Fig. 3 (B), the reinforcing fiber yarn bundle 21 is deformed in a sector-like shape by adjusting the gaps between the respective reinforcing fiber yarns 2, thereby forming it as a sector-like reinforcing fiber yarn bundle 22. The gaps between the respective reinforcing fiber yarns 2 are preferably in a condition where the respective reinforcing fiber yarns 2 are not overlapped, and within 3 mm. Therefore, it is also preferred that the used unidirectional reinforcing fiber woven fabric is a woven fabric in which gaps are present in advance between the reinforcing fiber yarns forming the fabric. Then, as shown in Fig. 3 (C), by arranging a predetermined number of sector-like reinforcing fiber yarn bundles 22 so as to be adjacent to each other in the circumferential direction 3 of the curved shape, a 90°oriented curved reinforcing fiber substrate 23 can be completed which has a targeted width W4 as the planar shape (W4 is substantially equal to W3) and has a curved shape with a target radius of curvature R, and in which respective reinforcing fiber yarns 2 extend in parallel to each other in a direction perpendicular to the circumferential direction 3 of the curved shape and a target formation of reinforcing fiber yarns 2 arranged in parallel to each other in 90°direction (direction perpendicular to the circumferential direction 3 of the curved shape) is achieved. In such a curved reinforcing fiber substrate 23, from the formation where the respective reinforcing fiber yarn bundles 22 arranged adjacent to each other are formed in sector-like shapes as shown in Fig. 3 (B), gaps 24 between reinforcing fiber yarns 2 in the reinforcing fiber yarn bundle 22 are enlarged in the outer side 26 in the radial direction of the curved shape as compared with in the inner side 25 in the radial direction. Although the curved reinforcing fiber substrate tends to become greater in density of reinforcing fiber yarns 2 in the inner side 25 and to become smaller in density of reinforcing fiber yarns 2 in the outer side 26, by providing gaps between the reinforcing fiber yarns 2, because the gaps can be dispersed over the entire curved reinforcing fiber substrate so that a large gap is not formed locally, such a condition is preferred. Further, also with gaps 27 between adjacent reinforcing fiber yarn bundles 22, by forming them so as to be enlarged in the outer side 26 in the radial direction of the curved shape as compared with in the inner side 25 in the radial direction, a more preferable distribution condition of the reinforcing fiber yarns 2 can be achieved as the whole of the curved reinforcing fiber substrate 23. This gap 27 between reinforcing fiber yarn bundles 22 is not particularly limited, but it is preferably set so as to be within 3 mm. By setting it within 3 mm, even if gaps are present, in a composite material, a remarkable reduction in properties is not found, and therefore, such a condition is preferred.

The curved reinforcing fiber substrate shown in Fig. 4 is made, for example, as follows. For example, as shown in Fig. 4 (A), a plurality of reinforcing fiber yarns 2 are arranged in one direction in parallel to each other so as to extend linearly, and a unidirectional reinforcing fiber woven fabric with a predetermined width having auxiliary weft yarns 4 and auxiliary warp yarn 5 is cut in a direction defined at an acute angle relative to the extending direction of the reinforcing fiber yarns 2, thereby preparing a plurality of relatively small-width (width W5) reinforcing fiber yarn bundles 31 each with a predetermined width and a predetermined length. If such an acute-angle cut reinforcing fiber yarn bundle 31 with a rhombic shape is left as it is, because a curved shape cannot be formed as a whole even if a plurality of them are arranged, as shown in Fig. 4 (B), the reinforcing fiber yarn bundle 31 is deformed in a shape resembling a sector by adjusting the gaps between the respective reinforcing fiber yarns 2, thereby forming it as a deformed reinforcing fiber yarn bundle 32. Then, as shown in Fig. 4 (C), by arranging a predetermined number of deformed reinforcing fiber yarn bundles 32 so as to be adjacent to each other in the circumferential direction 3 of the curved shape, an acute-angle oriented curved reinforcing fiber substrate 33 can be completed which has a targeted width W6 as the planar shape and has a curved shape with a target radius of curvature R, and in which respective reinforcing fiber yarns 2 extend in parallel to each other in a direction defined at an acute angle relative to the circumferential direction 3 of the curved shape and a target formation of reinforcing fiber yarns 2 arranged in parallel to each other in a direction defined at an acute angle (for example, a direction of +45° or -45°) relative to 0°direction (the circumferential direction 3 of the curved shape) is achieved. In such a curved reinforcing fiber substrate 33, from the formation where the respective reinforcing fiber yarn bundles 32 arranged adjacent to each other are formed in shapes resembling sectors as shown in Fig. 4 (B), gaps 34 between reinforcing fiber yarns 2 in the reinforcing fiber yarn bundle 32 are enlarged in the outer side 36 in the radial direction of the curved shape as compared with in the inner side 35 in the radial direction. Similarly in the above-described case of 90°oriented curved reinforcing fiber substrate 23, by providing gaps between the reinforcing fiber yarns 2, because the gaps can be dispersed over the entire curved reinforcing fiber substrate so that a large gap is not formed locally, such a condition is preferred. Further, also with gaps 37 between adjacent reinforcing fiber yarn bundles 32, by forming them so as to be enlarged in the outer side 36 in the radial direction of the curved shape as compared with in the inner side 35 in the radial direction, a more preferable distribution condition of the reinforcing fiber yarns 2 can be achieved as the whole of the curved reinforcing fiber substrate 33. This gap 37 between reinforcing fiber yarn bundles 32 also is not particularly limited, but it is preferably set so as to be within 3 mm.

Thus, the number and the shape of the reinforcing fiber yarns contained in the reinforcing fiber yarn bundle shown in Fig. 3 (A) or Fig. 4 (A) are preferably set so that the gap between reinforcing fiber yarn bundles becomes at least within 3 mm when the reinforcing fiber yarn bundles are arranged in a form of a curved shape.

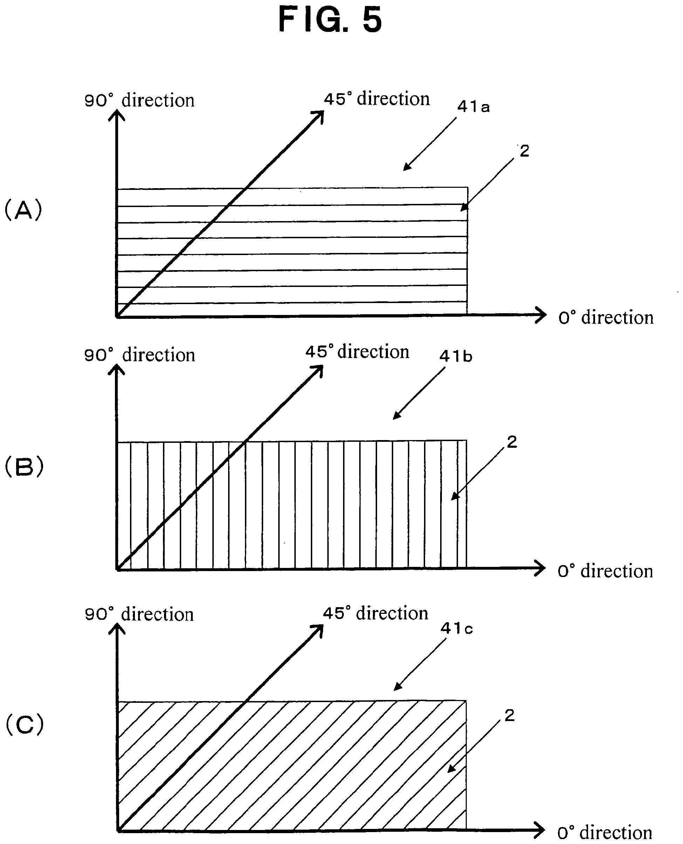

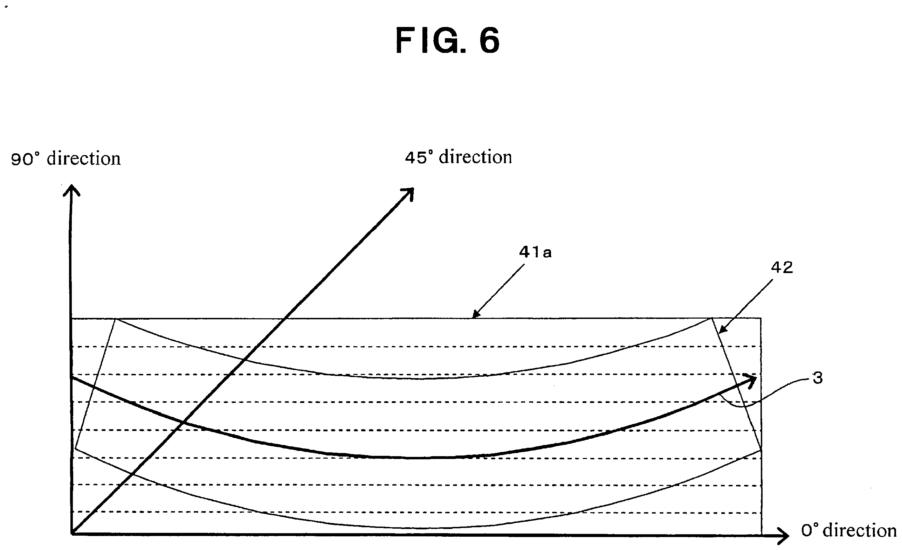

For comparison, in Figs. 5 and 6, examples will be shown with respect to an orientation of reinforcing fiber yarns in a conventional reinforcing fiber substrate and a case where a curved reinforcing fiber substrate is cut out from the substrate. As shown in Fig. 5, as conventional unidirectional substrates, 0°oriented substrate 41a oriented with reinforcing fiber yarns 2 in 0°direction (Fig. 5 (A)), 90°oriented substrate 41b oriented with reinforcing fiber yarns 2 in 90°direction (Fig. 5 (B)) and 45°oriented substrate 41c oriented with reinforcing fiber yarns 2 in 45°direction (or -45°direction) (Fig. 5 (C)) are known, and in order to make a long-scaled substrate curved with the orientation shape of reinforcing fiber yarns 2, special devices as aforementioned are necessary. If, as shown in Fig. 6, a curved substrate 42 along the circumferential direction 3 of the curved shape as shown in Fig. 1 were merely cut out from 0°oriented substrate 41a as shown in Fig. 5 (A), the reinforcing fiber yarns 2 cannot be oriented along the circumferential direction 3 of the curved shape.

When the curved reinforcing fiber substrate is made by using the aforementioned reinforcing fiber yarn bundles in, because a unidirectional reinforcing fiber woven fabric prepared by a conventional technology can be used, a particular weaving technology for the woven fabric is not necessary. Further, as aforementioned, because the curved shape can be formed by adjusting the gaps between the reinforcing fiber yarns and a size for one gap may be small, a substrate with a preferable formation can be made also from the viewpoint of uniform quality in material.

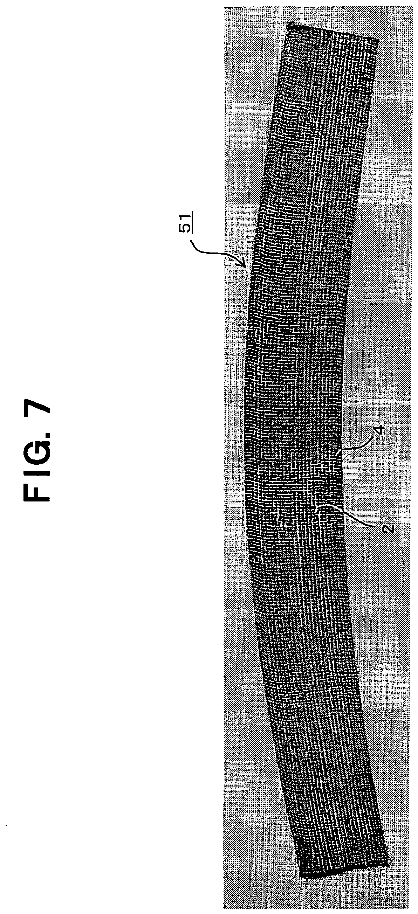

With respect to a curved reinforcing fiber substrate with a formation as shown in Fig. 1, an example of an actually made one is shown in Fig. 7. Fig. 7 shows a curved reinforcing fiber substrate 51 formed from a single sheet of substrate prepared by nipping a woven fabric, arranged with a plurality of reinforcing fiber yarns 2 in parallel to each other and arranged with auxiliary weft yarns 4, between rollers each having a tapered shape corresponding to a radius of curvature R of a predetermined curved shape, and pulling out the woven fabric by rotating the rollers.

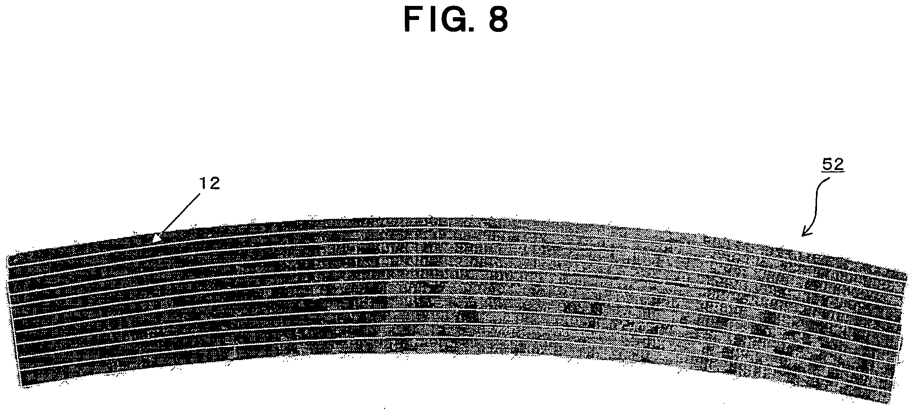

Further, with respect to the curved reinforcing fiber substrates actually prepared by the aforementioned methods using reinforcing fiber yarn bundles, an example having prepared 0°oriented curved reinforcing fiber substrate 52 by the method shown in Fig. 2 is shown in Fig. 8, and an example having prepared an acute-angle (-45°) oriented curved reinforcing fiber substrate 53 by the method shown in Fig. 4 is shown in Fig. 9, respectively. In the 0°oriented curved reinforcing fiber substrate 52 shown in Fig. 8, reinforcing fiber yarn bundles 12, for example, each formed from four reinforcing fiber yarns, are arranged by a predetermined number in the radial direction of the curved shape to form the curved reinforcing fiber substrate 52 having a target width. In the acute-angle oriented curved reinforcing fiber substrate 53 shown in Fig. 9, acute-angle cut reinforcing fiber yarn bundles 32, for example, each formed from twelve reinforcing fiber yarns, are arranged by a predetermined number in the radial direction of the curved shape to form the curved reinforcing fiber substrate 53 having a target width.

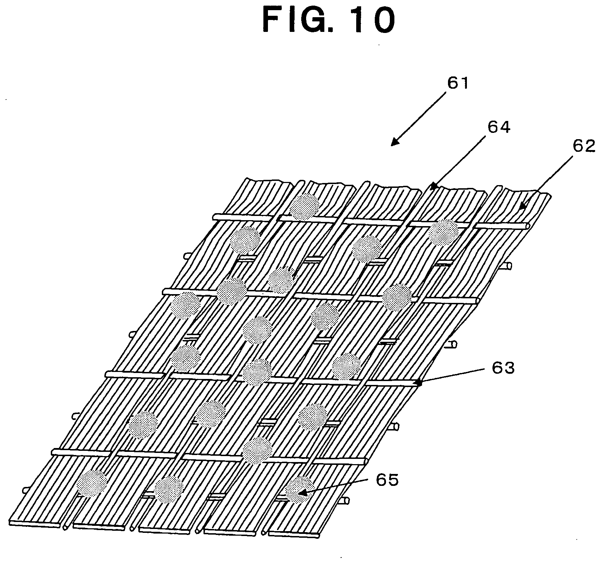

In case where respective reinforcing fiber substrates prepared above are used as reinforcing fiber layers and layered in a form of a layered product, the respective flat plate-like reinforcing fiber layers are preferably integrated at the layered condition, and in particular, preferably integrated by bonding due to resin material. Namely, as aforementioned, a formation is preferred wherein a resin material whose main component is a thermoplastic resin is provided at a dot-like, linear or discontinuous condition on at least one surface of at least one layer of the reinforcing fiber layers adjacent to each other in the layering direction (namely, on at least one surface of a curved reinforcing fiber substrate to be layered), and a formation is preferred wherein via the resin material the adjacent reinforcing fiber layers of the layered product are bonded to each other. For example, as a part of unidirectional reinforcing fiber woven fabric 61 to be formed into the aforementioned curved reinforcing fiber substrate is shown in Fig. 10, a formation can be employed wherein a resin material 65 whose main component is a thermoplastic resin is provided at a dot-like, linear or discontinuous condition is provided to a unidirectional reinforcing fiber woven fabric 61 in which reinforcing fiber yarns 62 arranged in one direction in parallel to each other are held at a predetermined formation by bundling of auxiliary weft yarns 63 and auxiliary warp yarns 64, and via this resin material 65, the adjacent reinforcing fiber layers can be bonded to each other when the reinforcing-fiber layered product is formed. The adhesion amount of this resin material 65 is preferably in a range of 2 g/m² or more and 40 g/m² or less as aforementioned, and the glass transition temperature of the resin material is preferably in a range of 0°C or higher and 95°C or lower. By such a providing of resin material 65, the formation as the curved reinforcing-fiber layered product can be easily held, and the layered product becomes easy to be handled.

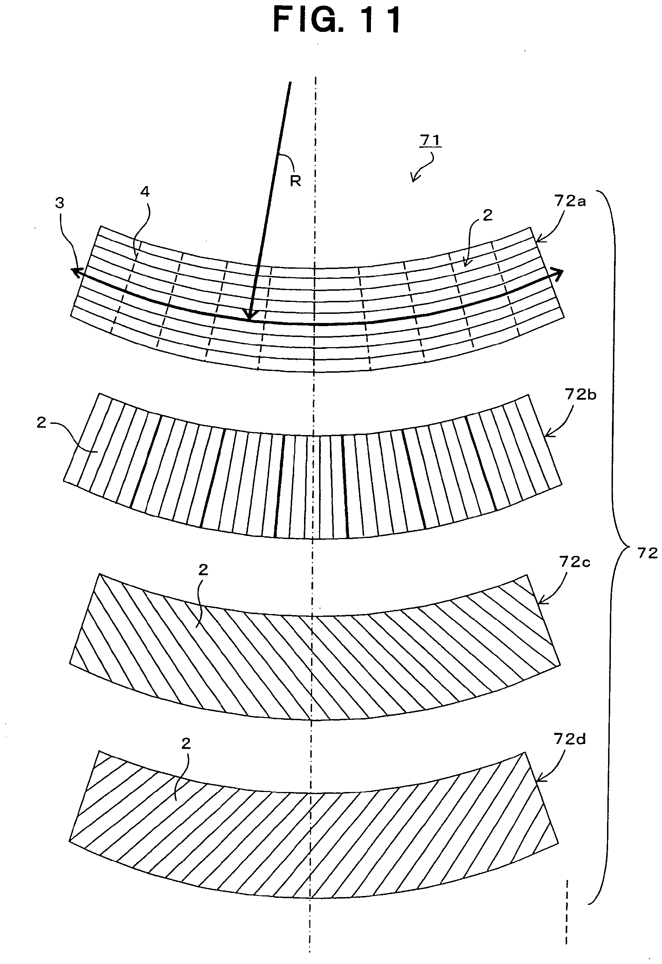

The curved reinforcing-fiber layered product produced according to the present invention is made by layering the respective reinforcing fiber substrates prepared as described above as respective reinforcing fiber layers. Fig. 11 schematically shows an exploded view of a curved reinforcing-fiber layered product produced according to an embodiment of the present invention. A curved reinforcing-fiber layered product 71 comprises a plurality of flat-plate like reinforcing fiber layers 72 each having a curved shape with a radius of curvature R as the planar shape. In the example shown in the figure, a 0°oriented curved reinforcing fiber substrate as shown in Fig. 1 or Fig. 2, in which reinforcing fiber yarns 2 are arranged in parallel to the circumferential direction 3 of the curved shape, is used as reinforcing fiber layer 72a, a 90°oriented curved reinforcing fiber substrate as shown in Fig. 3, in which reinforcing fiber yarns 2 are arranged in parallel to each other in a direction perpendicular to the circumferential direction 3 of the curved shape, is used as reinforcing fiber layer 72b, and -45°oriented curved reinforcing fiber substrate and +45°oriented curved reinforcing fiber substrate as shown in Fig. 4, in which reinforcing fiber yarns 2 are arranged in parallel to each other in a direction defined at an acute angle relative to the circumferential direction 3 of the curved shape, are used as reinforcing fiber layers 72c, 72d. It is preferred that the resin material is provided to at least one surface of each reinforcing fiber layer 72 as shown in Fig. 10, and by that, the respective reinforcing fiber layers 72 are bonded and integrated at a desirable formation. By such a providing of resin material, the formation as the whole of the curved reinforcing-fiber layered product 71 can be easily held, and the layered product becomes easy to be handled. Further, desirable properties can be easily obtained, when a preform described next is formed, and further when molded from the formed preform to a fiber-reinforced composite material.

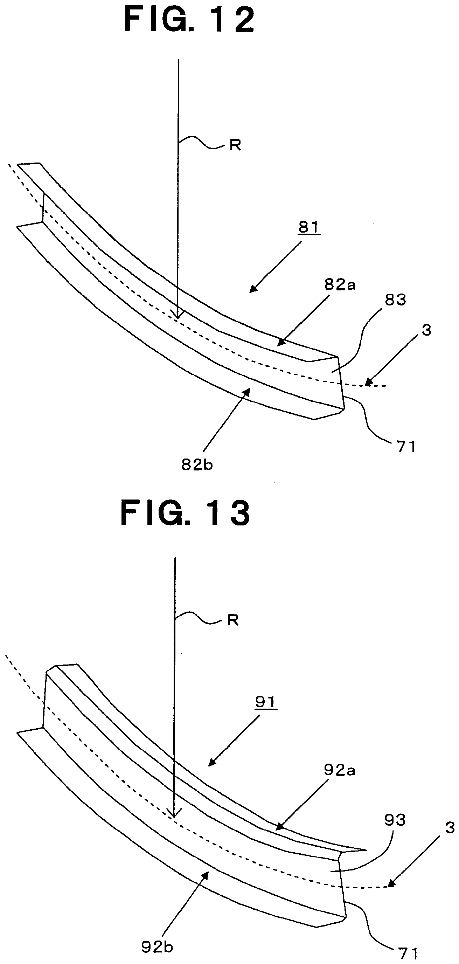

Using the curved reinforcing-fiber layered product prepared as described above, a preform with a predetermined cross-sectional shape having a flange portion is formed. The preform is formed, for example, in shapes as shown in Figs. 12-14.

In a preform 81 shown in Fig. 12, the curved reinforcing-fiber layered product 71 prepared, for example, by the layering as shown in Fig. 11, is formed in a shape which has flange portions 82a, 82b bent along the circumferential edges of the curved shape (namely, along the circumferential direction 3 of the curved shape with a radius of curvature R) as viewed in the section of the transverse direction of the layered product 71 perpendicular to the longitudinal direction of the layered product 71. Both flange portions 82a, 82b are bent in the same direction, and the preform 81 has a C shaped cross section. As the bending angle of flange portions 82a, 82b relative to web portion 83, an angle other than 90°may be employed, and the bending angles of flange portions 82a, 82b relative to web portion 83 may be different from each other. Further, the sizes of flange portions 82a, 82b may be either same or different from each other. This preform 81 a dry preform as an intermediate formed body for molding a fiber-reinforced composite material with a predetermined long-scaled curved shape.

In a preform 91 shown in Fig. 13, the curved reinforcing-fiber layered product 71 prepared, for example, by the layering as shown in Fig. 11, is formed in a shape which has flange portions 92a, 92b bent along the circumferential direction 3 of the curved shape with a radius of curvature R. In this example, both flange portions 92a, 92b are bent in directions opposite to each other relative to web portion 93, and the preform 91 has a Z shaped cross section.

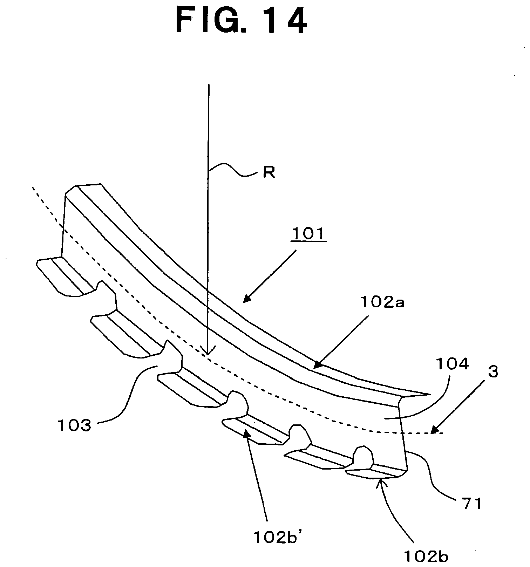

In a preform 101 shown in Fig. 14, the curved reinforcing-fiber layered product 71 prepared, for example, by the layering as shown in Fig. 11, is formed in a shape which has flange portions 102a, 102b bent along the circumferential direction 3 of the curved shape with a radius of curvature R. In this example, both flange portions 102a, 102b are bent in directions opposite to each other relative to web portion 104, and the preform 101 has a Z shaped cross section. Then, in this example, among both flange portions 102a, 102b, flange portion 102b bent along the circumferential edge of the curved shape with a larger radius of curvature of the curved shape is divided into a plurality of flange portions 102b' in the longitudinal direction of the layered product 71, and spaces 103 are defined between respective adjacent divided flange portions 102b'. It is preferred that, as depicted in the figure, the space 103 extends by an appropriate length up to web portion 104. By forming the flange portion 102 at the side with a larger radius of curvature in the shape having divided flange portions 102b' and spaces 103 therebetween, occurrence of wrinkles can be prevented at the time of bending.

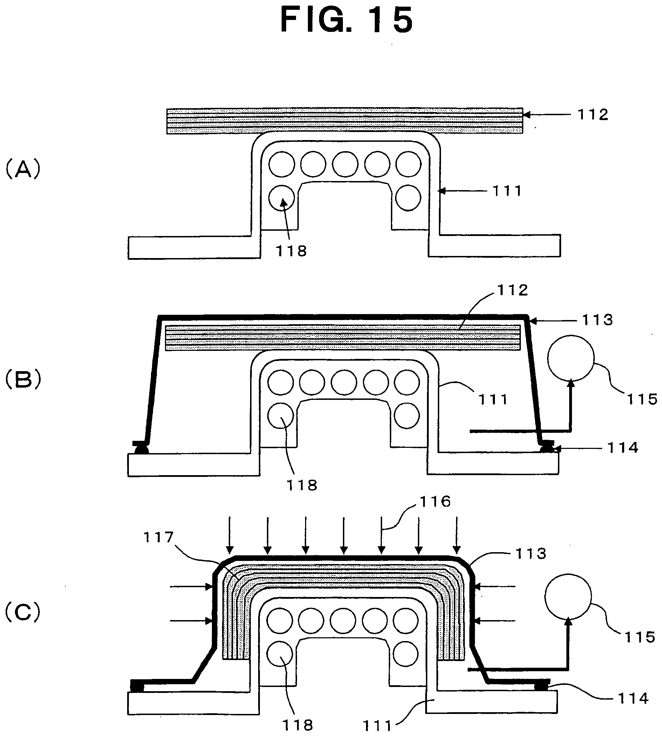

As aforementioned, the above described preform can be formed by various methods such as a method using a mold and an elastic sheet placed thereon, a method using a double surface mold, or a method using bladders. In particular, in case of forming in a shape having the aforementioned C shaped cross section, a method using an elastic sheet is simple and suitable, and an example of its device is shown in Fig. 15.

Fig. 15 shows a device for forming and a cross section of a preform. First, as shown in Fig. 15 (A), a curved reinforcing-fiber layered product 112 is placed at a predetermined position of a mold for forming 111. Next, as shown in (B), the curved reinforcing-fiber layered product 112 is covered with an elastic sheet 113, and the portion between the elastic sheet 113 and the mold for forming 111 is sealed by sealant 114, etc. Next, as shown in (C), by evacuating and reducing in pressure the sealed inside by vacuum evacuation means 115, the curved reinforcing-fiber layered product 112 is pressed to the mold for forming 111 by atmospheric pressure 116 to prepare a preform with a C shaped section.

By heating preform 117 at the vacuum evacuated condition by utilizing a hot air oven, etc., the interlayer between the reinforcing fiber layers of the curved reinforcing-fiber layered product 112 is bonded and integrated via the resin material over the entire surface and the predetermined shape of the preform 117 can be held. Further, by adequately adjusting the heating time and temperature while vacuum evacuating, not only the bonding and integrating, but also the adjustment of the thickness of the preform 117 are possible. As the heating method, as shown in Fig. 15, a method can also be employed for circulating a heat medium such as hot water or hot oil in flow path 118 for the heat medium provided in mold for forming 111.

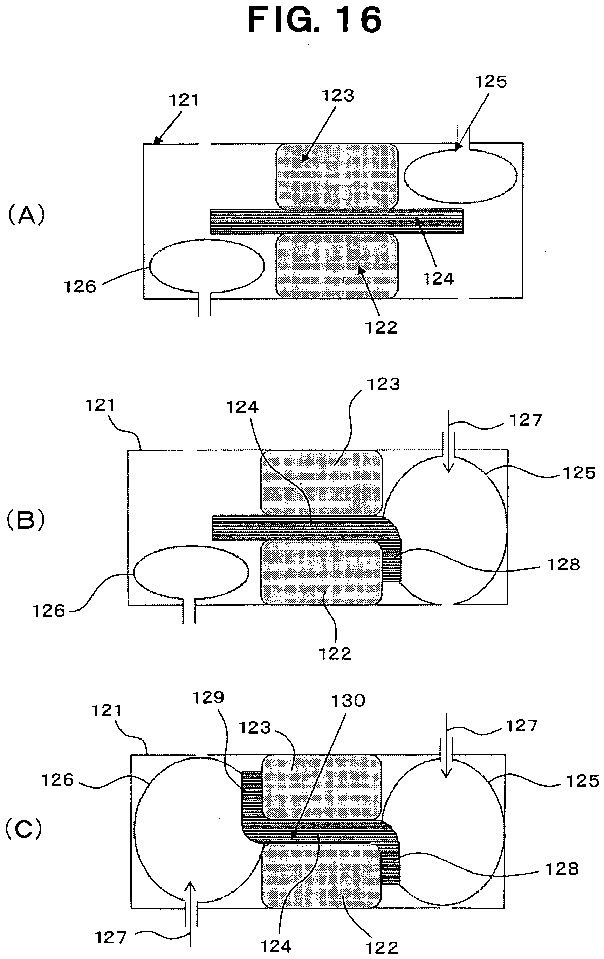

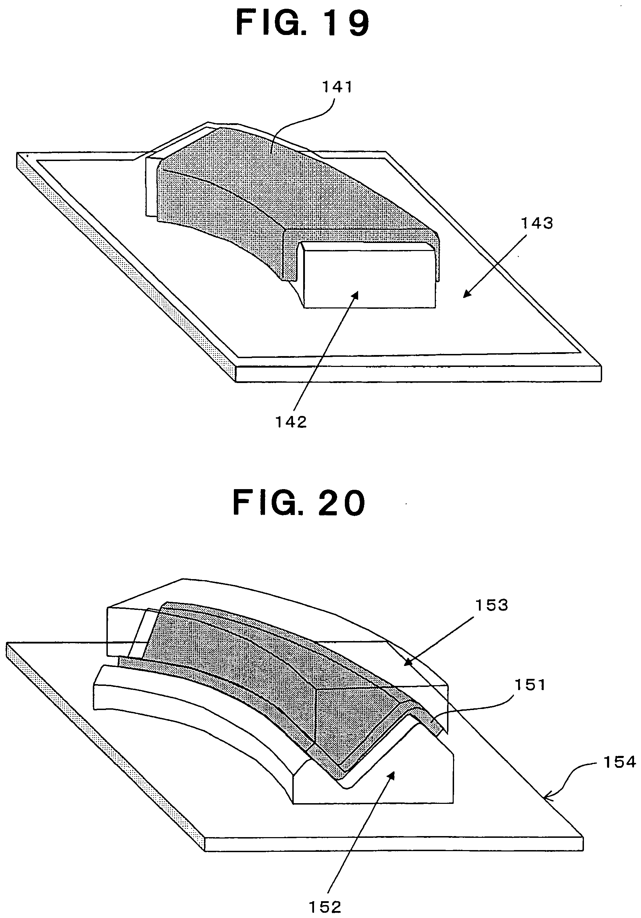

Further, when formed to a shape with the aforementioned Z shaped cross section, although a forming method using a double-surface mold as shown in Fig. 20 described later is possible, a method using bladders is suitable, and an example of the device and an example for forming are shown in Fig. 16.

First, as shown in Fig. 16 (A), mandrels 122, 123 as molds, a curved reinforcing-fiber layered product 124 nipped between the mandrels 122, 123, and bladders 125, 126 disposed on both sides of the mandrels 122, 123 and capable of being independently operated in expansion/contraction, are provided at predetermined positions in a chamber 121. The bladders 125, 126 are made from a silicone rubber for example, and they are expanded by introducing a relative pressurized fluid into the insides and contracted by discharging the pressurized fluid.

By closing the chamber 121 at a sealed condition and pressure reducing the inside of the bladder 125 containing-side portion of the chamber 121, as shown in Fig. 16 (B), atmospheric air 127 is introduced into bladder 125 from the outside, and the bladder 125 is expanded by the relative pressurizing due to a pressure difference between the pressure (atmospheric pressure) of the introduced atmospheric air 127 and the pressure in the pressure-reduced chamber 121. By this expanded bladder 125, one end portion 128 in the section of the layered product 124 is pressed to mandrel 122, and it is bent and formed in a shape of a flange portion along the side-surface shape of mandrel 122.

Next, by reducing in pressure the inside of bladder 126 containing-side portion of the chamber 121, as shown in Fig. 16 (C), atmospheric air 127 is introduced into bladder 126 from the outside, and the bladder 126 is expanded by the relative pressurizing due to a pressure difference between the pressure (atmospheric pressure) of the introduced atmospheric air 127 and the pressure in the pressure-reduced chamber 121. By this expanded bladder 126, the other end portion 129 in the section of the layered product 124 is pressed to mandrel 123, and it is bent and formed in a shape of a flange portion along the side-surface shape of mandrel 123. A Z-shaped section preform 130 is formed by bending the end portions in directions opposite to each other, one end portion 128 in the section of the layered product 124 to mandrel 122 side and the other end portion 129 to mandrel 123 side.

Next, heating is carried out at the condition shown in Fig. 16 (C) to hold the layered product 124 at the formed shape. The heating may be carried out over the whole in the chamber 121 and mandrels 122, 123 may be heated by communication of heat medium, an electric heater, etc. Furthermore, it is also possible to heat the fluid introduced into bladders 125, 126.

Because the above-described device does not a drive system and uses atmospheric pressure as pressurizing means, the device structure is very simple. Further, by controlling the order of the pressurizing due to the respective bladders 125, 126, the order for forming can be easily controlled. Further, in case where the order for forming due to the respective bladders 125, 126 and a predetermined forming is carried out for a long-scaled layered product, because the layered product can be formed while it is appropriately shifted in position in the longitudinal direction, wrinkles and the like become hard to be generated. At that time, as shown in Fig. 14, by providing spaces 103 and forming divided flange portions 102b' present with space 103 therebetween, wrinkles and the like become harder to be generated. Furthermore, when flange portions with predetermined shapes are formed for a long-scaled layered product, it is also preferred to form the central portion in the longitudinal direction in the curved layered product first, and thereafter, form the both side portions of the central portion in the longitudinal direction.

Where, although atmospheric air 127 is introduced into bladders 125, 126 in the above-described example, as aforementioned, it is also possible to introduce an appropriate pressurized fluid other than atmospheric air 127. In such a case, because bladders 125, 126 can be expanded by the introduced pressurized fluid, a chamber capable of being closed at a sealed condition is not necessary. However, members for receiving reaction forces when bladders 125, 126 expand and exhibit pressing forces in the forming directions are required.

Furthermore, this method using bladders can be applied also to the forming to C shaped cross section. For example, in Fig. 16 (A) to (C), if bladders 125, 126 are disposed at symmetric positions in the left and right sides relative to mandrels 122 or 123, the forming to C shaped cross section can be easily carried out.

Using the dry preform thus formed in a predetermined sectional shape, by impregnating a matrix resin into the preform and curing the impregnated resin, a fiber-reinforced resin composite material with a desirable shape is molded. In this case, it can also be carried out to heat the preform for a predetermine time at the condition having formed flange portions of the preform to fix the formed condition of the preform, and thereafter, impregnate the resin. By fixing the formed condition of the preform by heating, the breakage of the formation can be prevented even at the time of impregnating the resin. The molding of the curved fiber-reinforced resin composite material can be carried out, for example, by RTM molding method (Resin Transfer Molding), a matrix resin (for example, a thermosetting resin such as an epoxy resin) is impregnated into the preform, the impregnated resin is heated at a predetermined temperature and cured, and a fiber-reinforced resin composite material with a desirable shape is produced.

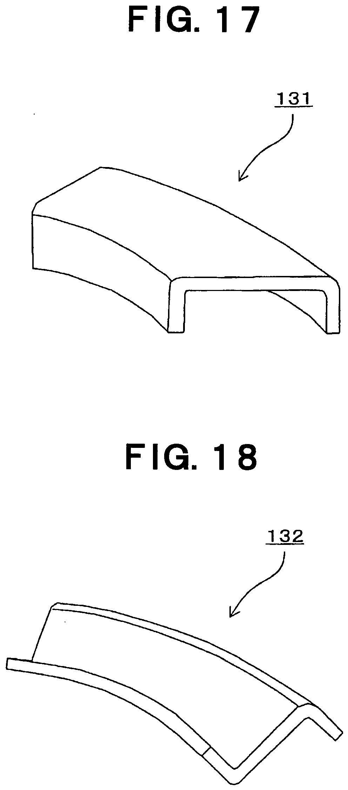

Examples of preforms formed as described above are shown in Figs. 17 and 18. Fig. 17 exemplifies a preform 131 formed in a C-shaped cross section, and Fig. 18 exemplifies a preform 132 formed in a Z-shaped cross section.

As the method for producing the curved fiber-reinforced resin composite material, as aforementioned, any of a method using a bagging material and a method using a double surface mold can be employed. Fig. 19 shows an example of the method using a bagging material (so-called vacuum assisted RTM molding method). A preform 141 formed in a predetermined cross-sectional shape as aforementioned is placed on a mold 142, and the preform 141 is covered with a sheet-like bagging material 143 and the inside is sealed. The sealed inside is reduced in pressure by evacuation, a matrix resin is injected into the pressure-reduced inside, and the injected resin is impregnated into the preform 141. The impregnated resin is cured, for example, by heating. In such a molding method, if the mold 142 as a lower mold only is made at a high accuracy, because a material having a predetermined area may be used as the bagging material 143, a large-sized curved fiber-reinforced resin composite material can be molded extremely easily.

Further, in the molding method shown in Fig. 20, a preform 151 formed in a predetermined cross-sectional shape as aforementioned is disposed in mold 154 structure as a double-surface mold comprising a lower mold 152 and an upper mold 153, a matrix resin is injected into the mold 154 (any of injection by evacuation due to pressure reduction and injection through pressurization may be employed), the injected resin is impregnated into the preform, and the impregnated resin is cured, for example, by heating. In such a molding method, because the shape of the fiber-reinforced resin composite material to be molded is defined from both surfaces, it is possible to mold the curved fiber-reinforced resin composite material at a higher accuracy.

### Examples

Hereinafter, the present invention will be explained concretely using Examples and Comparative Examples. As materials in Examples and Comparative Examples, the following materials were used.
- Reinforcing fiber yarn: polyacrylonitrile (PAN) based carbon fiber yarns (24,000 filaments, fineness: 1030 tex, tensile strength: 5.9 GPa, tensile elastic modulus: 294 GPa)
- Auxiliary weft yarn: glass fiber yarn (fineness: 4.2 tex)
- Auxiliary warp yarn: glass fiber yarn (fineness: 22.5 tex)
- As resin material, particles produced from the following materials were used.
   "Sumika Excel" 5003P (polyethersulfone, produced by Sumitomo Chemical Company, Limited)
   "Epikote" 806 (bisphenol F-type epoxy resin, produced by Japan Epoxy Resins Co., Ltd.)
   "NC-3000" (biphenyl aralkyl type epoxy resin, produced by Nippon Kayaku Kabushiki Kaisha)
   "TEPIC"-P (isocyanuratetype epoxy resin, produced by Nippon Chemical Industrial Co., Ltd.)

"Epikote" 806 (23.5 wt.%), NC-3000 (12.5 wt.%) and "TEPIC"-P (4 wt.%) were mixed at 100°C until a uniform condition was achieved to prepare an epoxy resin mixture. Next, a resin composition prepared by melting and kneading "Sumika Excel" 5003P (60 wt.%) and the epoxy resin mixture compatibly was frozen and milled to prepare particles. The mean particle diameter of the obtained particles was 90µm (determined by LMS34 produced by Kabushiki Kaisha Seisin using laser diffraction/scattering method).

### Example 1:

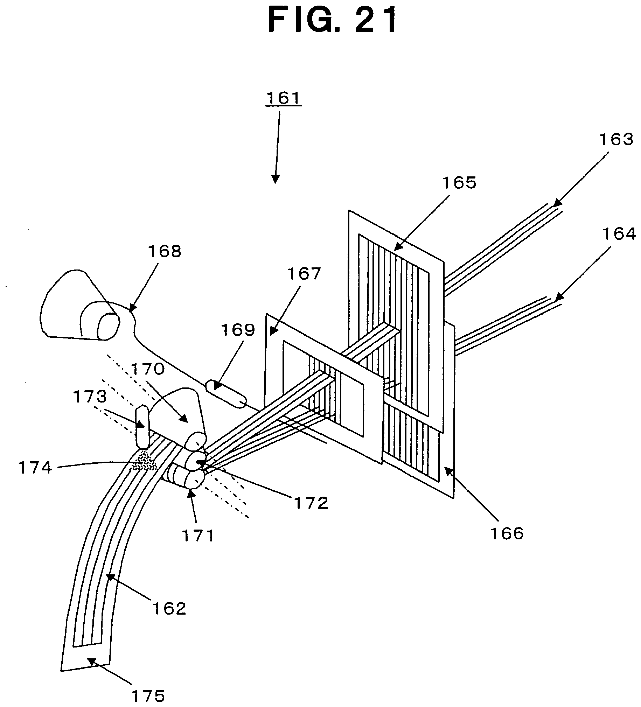

Using a weaving machine for curved reinforcing fiber substrate 161 shown in Fig. 21, a 0°oriented curved reinforcing fiber substrate 162 arranged with reinforcing fiber yarns in the circumferential direction of the curved shape shown in Fig. 1 was prepared. The shape of the substrate was 3m in radius of curvature R, 200 mm in width of substrate, and 4.7 m in length. As shown in Fig. 21, the weaving machine for curved reinforcing fiber substrate 161 is constructed from healds 165, 166 and a reed 167 for reinforcing fiber yarns 163 and auxiliary warp yarns 164, a weft yarn threading mechanism 169 for inserting auxiliary weft yarns 168, and upper, lower and intermediate mandrels 170, 171, 172. At a rear position of these mandrels, a resin material scattering device 173 and a infrared ray heater (not shown) at a further rear position are attached, resin particles 174 scattered on the woven curved reinforcing fiber substrate 162 are heated and the particles can adhere to the curved reinforcing fiber substrate 162. The curved reinforcing fiber substrate 162 is sent onto a seating 175. Where, the upper and lower mandrels 170, 171 had a taper shape, and the taper degree was set at 1/50. Reinforcing fiber yarns163, auxiliary weft yarns 168 and auxiliary warp yarns 164 are inserted between the upper and lower mandrels 170, 171, the respective mandrels are rotated at a speed corresponding to the weaving speed, and an adequate tension can be applied to the reinforcing fiber yarns163 and the auxiliary warp yarns 164.

The curved reinforcing fiber substrate 162 was woven by disposing 40 reinforcing fiber yarns163, totally 41 warp yarns 164 at positions between the reinforcing fiber yarns and at both end positions in the transverse direction of the substrate, and one weft yarn 168 in the weaving machine 161. Resin material 174 was scattered on the surface of curved reinforcing fiber substrate 162 pulled out from the mandrels so that the weight of the resin material 174 became 27 g/m², and using an infrared ray heater, the surface temperature of the curved reinforcing fiber substrate 162 was heated at 180°C to make the resin material 174 adhere thereto.

The prepared curved reinforcing fiber substrate had an NCW structure as shown in Fig. 10, it was confirmed that the reinforcing fiber yarns were arranged in parallel to each other along the circumferential direction (0°direction) of radius of curvature R=3 m over the longitudinal entire length in the circumferential direction.

### Example 2:

Using the same materials as those in Example 1, a unidirectional reinforcing fiber woven fabric with a width of 1 m was woven wherein the prepared reinforcing fiber yarns were arranged in one direction in parallel to each other and so as to extend linearly, the auxiliary warp yarns were arranged between the reinforcing fiber yarns in parallel to each other, and the auxiliary weft yarns were arranged so as to be substantially perpendicular to the reinforcing fiber yarns and the auxiliary warp yarns. The resin material was scattered on the surface of the unidirectional reinforcing fiber woven fabric so that the weight of the resin material became 27 g/m², and using an infrared ray heater, the surface temperature of the curved reinforcing fiber substrate was heated at 180°C to make the resin material adhere thereto. Using this unidirectional reinforcing fiber woven fabric, a 90°oriented curved reinforcing fiber substrate as shown in Fig. 3 (C) was prepared.

First, by cutting the unidirectional reinforcing fiber woven fabric in a direction perpendicular to the reinforcing fiber yarns so that the length of the reinforcing fiber yarns became 200 mm, as shown in Fig. 3 (A), four reinforcing fiber yarn bundles each having a rectangular shape and having a width of 200 mm and a length of 1 m and one reinforcing fiber yarn bundle having a width of 200 mm and a length of 0.7 m were prepared. All the reinforcing fiber yarn bundles were deformed so as to become a curved shape with a radius of curvature of 3 m by adjusting the gaps of the used reinforcing fiber yarn bundles, and the deformed reinforcing fiber yarn bundles were arranged and coupled in the longitudinal direction of the reinforcing fiber yarn bundles so that the reinforcing fiber yarns were not overlapped and the gaps did not become 3 mm or more, to prepare a 90°oriented curved reinforcing fiber substrate with a width of 200 mm and length of 4.7 m.

The prepared 90°oriented curved reinforcing fiber substrate had an NCW structure as shown in Fig. 10, and it was confirmed that the reinforcing fiber yarns were arranged in 90°direction relative to the circumferential direction (0°direction) of radius of curvature R=3 m over the longitudinal entire length in the circumferential direction.

### Example 3:

The unidirectional reinforcing fiber woven fabric with a width of 1 m and having an NCW structure prepared in Example 2 was prepared. By cutting the unidirectional reinforcing fiber woven fabric in 45°direction relative to the arrangement direction of the reinforcing fiber yarns and further cutting between the reinforcing fiber yarns for every 12 reinforcing fiber yarns, 56 sheets of reinforcing fiber yarn bundles each having 12 reinforcing fiber yarns and having a width of 200 mm as shown in Fig. 4 were prepared. All the reinforcing fiber yarn bundles were adjusted in gaps between reinforcing fiber yarn bundles, and were arranged and coupled along the curved shape in the longitudinal direction of the curved shape so that the reinforcing fiber yarns were not overlapped and the gaps did not become 3 mm or more, to prepare a 45°oriented curved reinforcing fiber substrate with a width of 200 mm and length of 4.7 m. In a similar manner, -45°oriented curved reinforcing fiber substrate was prepared.

The prepared 45°and -45°oriented curved reinforcing fiber substrates had an NCW structure as shown in Fig. 10, and it was confirmed that the reinforcing fiber yarns were arranged in 45°and -45°directions relative to the circumferential direction (0°direction) of radius of curvature R=3 m over the longitudinal entire length in the circumferential direction.

### Example 4:

0°, 90° and ±45° oriented curved reinforcing fiber substrates were prepared by the methods of Examples 1-3, and a layered product was prepared by layering them based on a layering structure of [(45/0/-45/90)]_{3S}. First, 45°oriented curved reinforcing fiber substrate was prepared in a manner similar to that in Example 3, 0° oriented curved reinforcing fiber substrate prepared b Example 1 was layered on the 45°oriented curved reinforcing fiber substrate, further thereon -45°oriented curved reinforcing fiber substrate prepared in a manner similar to that in Example 3 was layered, and further thereon, 90°oriented curved reinforcing fiber substrate prepared in a manner similar to that in Example 2 was layered to prepare a layered product of [45/0/-45/90]. The same layering was repeated two times, and a layered product of [45/0/-45/90]₃ formed by 12 ply was prepared.

On the layered product of [45/0/-45/90]₃ formed by 12 ply, an indentator jig arranged with indentators each having ϕ3 mm section and at a lattice-like condition with an interval of 25 mm was disposed, and by heating the layered product at 70°Cand holding the condition for 5minutes at a condition where the indentators were pressing the layered product at a pressure of 1 kg/cm², the curved reinforcing fiber substrates forming the layered product were bonded to and integrated with each other partially therebetween to prepare the layered product. Similarly, a layered product of [90/- 45/0/45]₃ was prepared, and similarly a layered product was prepared by partially bonding and integrating between the substrates. By layering these layered products, a layered product of [(45/0/-45/90)]_{3S} was prepared. It was confirmed that, because the substrates were bonded to and integrated with each other in the layered product, even when the layered product was conveyed to a mold, without breaking up the formation of the substrates, they could be well handled as the layered product.

### Example 5:

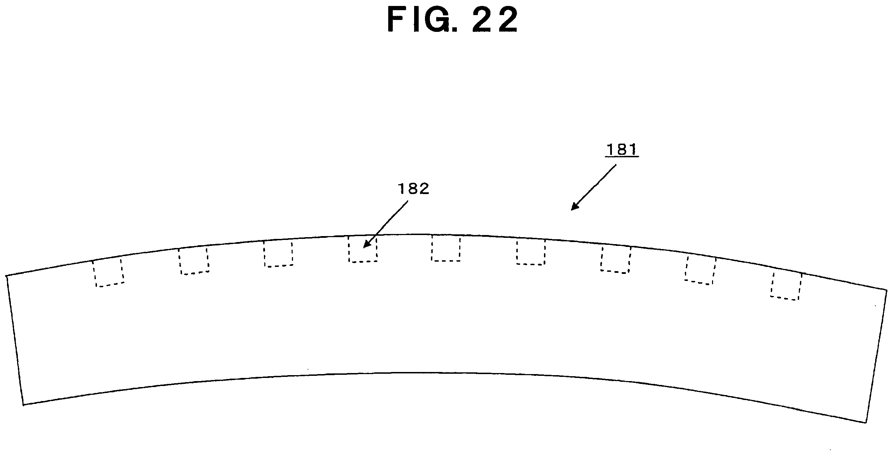

The layered product prepared in Example 4 was notched by an automatic cutting machine so that as shown in Fig. 22, notches 182 each having a width of 50 mm and a height of 50 mm were defined at an interval of 150 mm in the longitudinal direction of curved reinforcing-fiber layered product 181 along the circumferential edge of the curved shape at the side with a larger radius of curvature (outer side 26 shown in Fig. 3 (C)). The layered product was placed on the mold 142 functioning also as a mold for forming curved in the longitudinal direction at a radius of curvature R= 3 m shown in Fig. 19, and further, the layered product was covered with a silicone sheet with a thickness of 3 mm and the silicone sheet and the mold were sealed therebetween at a gas tight condition. Thereafter, by vacuum evacuating and reducing in pressure the inside of the silicone sheet, the layered product was pressed to the mold to be formed as a shape with a C-shaped section and curved in the longitudinal direction.

At the condition continued with the vacuum evacuation, by heating the layered product at 70°C and keeping the condition for 2 hours, it was bonded and integrated between the curved reinforcing substrates over the entire surface to prepare a preform. It was confirmed that the preform had no remarkable wrinkles on both the web portion and the flange portions and it was a good quality preform.

After completing the preparation of the preform, the vacuum evacuation for the inside of the silicone sheet was stopped, the silicone sheet was removed from the mold, auxiliary materials necessary for injection and impregnation of a matrix resin into the preform (peel ply, resin distribution medium, resin injection path, resin discharge path, vacuum evacuation path) were disposed, they were covered with a bagging film, and the portion between the bagging film and the mold was sealed at a gas tight condition. Thereafter, the inside of the bagging film was evacuated and reduced in pressure, and at that condition, an epoxy resin heated at 70°C and reduced in viscosity was injected and impregnated into the preform from the resin injection path via the resin distribution medium. After the injection and impregnation of the epoxy resin into the preform was completed, epoxy resin excessively injected and impregnated into the preform was bled out from the resin bleeding path by vacuum evacuation. After completion of the discharge, by heating at 180°C, the epoxy resin was cured to make a fiber-reinforced resin composite material with a C-shaped sectional shape and having a curved shape in the longitudinal direction at a radius of curvature R=3 m.

As a result of observing the orientation angle of the reinforcing fiber yarns of 45°layer at the surface layer of the fiber-reinforced resin composite material, it was confirmed that the reinforcing fiber yarns extended in the longitudinal direction and were arranged within 45°±3° relative to the circumferential direction (0°direction) of the curved shape.

On the other hand, test pieces each having a size of 50 x 50 mm were cut out from the both ends and the central portion in the longitudinal direction of the web portion of the fiber-reinforced resin composite material, and totally three test pieces were prepared. By X-ray CT, the orientation angles of the auxiliary warp yarns (glass fibers) of the respective layers in the test pieces were determined. Because the auxiliary warp yarns were arranged in parallel to the reinforcing fiber yarns, the orientation of the auxiliary warp yarns was estimated as the orientation of the reinforcing fiber yarns.

It was confirmed that the auxiliary warp yarns of the respective layers in the respective test pieces were oriented within ±3° relative to the respective orientation angles of the reinforcing fibers of the respective layers relative to the circumferential direction (0°direction) of the curved shape, and that the reinforcing fiber yarns of the respective layers were oriented at angles based on the layering structure relative to the circumferential direction (0°direction) of the curved shape.

### Example 6:

The unidirectional reinforcing fiber woven fabric with a width of 1 m and having an NCW structure prepared in Example 2 was prepared. From the unidirectional reinforcing fiber woven fabric, as shown in Fig. 2 (A), 10 sheets of reinforcing fiber yarn bundles each having 4 strands (in case of Fig. 2 (A), 3 strands) in the transverse direction and having a length of 4.7 m were prepared. arranged while being bent in the longitudinal direction of the curved shape so as to be along the curved shape. All the reinforcing fiber yarn bundles were disposed and coupled so that the reinforcing fiber yarns were not overlapped and the gaps did not become 3 mm or more, to prepare a 0°oriented curved reinforcing fiber substrate with a width of 200 mm and length of 4.7 m. The prepared 0°oriented curved reinforcing fiber substrate had an NCW structure as shown in Fig. 10, and it was confirmed that the reinforcing fiber yarns were arranged in 0°direction relative to the circumferential direction (0°direction) of radius of curvature R=3 m over the longitudinal entire length in the circumferential direction.

### Example 7:

A layered product was prepared by a method similar to that in Example 4 other than a condition where the 0°oriented curved reinforcing fiber substrate used in Example 4 was changed to the 0°oriented curved reinforcing fiber substrate prepared in Example 6. Further, using this layered product, a preform was prepared by a method similar to that in Example 5. It was confirmed that the preform had no remarkable wrinkles on both the web portion and the flange portions and it was a good quality preform.

Furthermore, a fiber-reinforced resin composite material with a C-shaped sectional shape and having a curved shape in the longitudinal direction at a radius of curvature R=3 m was prepared by a method similar to that in Example 5. As a result of observing the orientation angle of the reinforcing fiber yarns of 45°layer at the surface layer of the obtained fiber-reinforced resin composite material, it was confirmed that the reinforcing fiber yarns extended in the longitudinal direction and were arranged within 45°±3° relative to the circumferential direction (0°direction) of the curved shape.

On the other hand, test pieces each having a size of 50 x 50 mm were cut out from the both ends and the central portion in the longitudinal direction of the web portion of the fiber-reinforced resin composite material, and totally three test pieces were prepared. By X-ray CT, the orientation angles of the auxiliary warp yarns (glass fibers) of the respective layers in the test pieces were determined. Because the auxiliary warp yarns were arranged in parallel to the reinforcing fiber yarns, the orientation of the auxiliary warp yarns was estimated as the orientation of the reinforcing fiber yarns. It was confirmed that the auxiliary warp yarns of the respective layers in the respective test pieces were oriented within ±3° relative to the respective orientation angles of the reinforcing fibers of the respective layers relative to the circumferential direction (0°direction) of the curved shape, and that the reinforcing fiber yarns of the respective layers were oriented at angles based on the layering structure relative to the circumferential direction (0°direction) of the curved shape.

### Comparative Example 1:

By the method described in Patent document 1, a layered product of [(45/0/- 45/90)]_{3S} was prepared and it was estimated. The jig for arranging fiber bundles has a cylindrical shape with a diameter of 310 mm and a height of 300 mm, and pins are arranged at an interval of 48 mm in the circumferential direction at height positions of 50 mm and 250 mm.

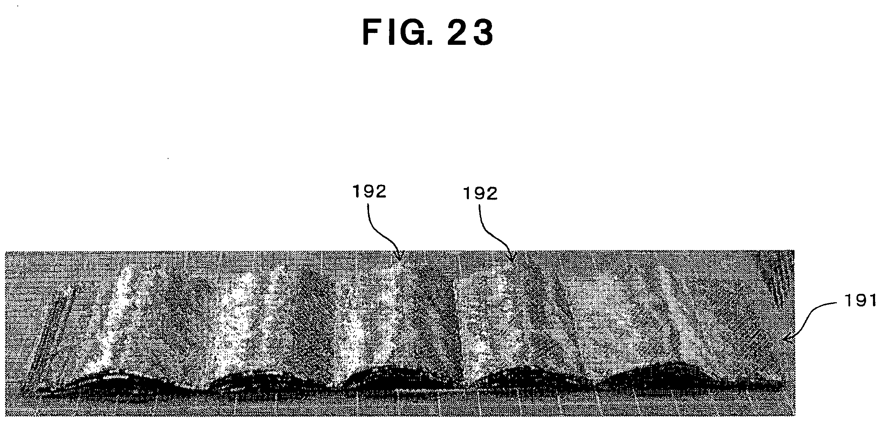

First, the reinforcing fiber yarn bundle for 45°oriented curved shape used in Example 3 was disposed at a condition of being pierced by pins to cover the cylindrical surface to prepare 45°oriented reinforcing fiber layer. Reinforcing fiber yarn bundle for 0°oriented reinforcing fiber layer was prepared by cutting the unidirectional reinforcing fiber woven fabric used in Example 2 at a length of 940 mm and a width of 200 mm referring to the arrangement direction of the reinforcing fiber yarns as a longitudinal direction. This reinforcing fiber yarn bundle was placed on the 45°oriented reinforcing fiber layer to layer 0°oriented reinforcing fiber layer. Further thereon, the reinforcing fiber yarn bundle for -45°oriented curved shape used in Example 3 was disposed similarly on the 0°oriented reinforcing fiber layer to layer -45°oriented reinforcing fiber layer. Further, reinforcing fiber yarn bundle for 90°oriented reinforcing fiber layer was prepared by cutting the unidirectional reinforcing fiber woven fabric used in Example 2 at a length of 940 mm and a width of 200 mm referring to the arrangement direction of the reinforcing fiber yarns as a transverse direction. This reinforcing fiber yarn bundle was placed on the -45°oriented reinforcing fiber layer to layer 90°oriented reinforcing fiber layer. Similarly, the layering of the respective layers was repeated until the layering structure of [(45/0/-45/90)]_{3S} was completed. After finish of the layering, at the condition where the layered product was placed on the jig for arranging the fiber bundles, the layered product was integrated by stitching in the thickness direction using the glass fibers used for the auxiliary warp yarns. The stitching was carried out at intervals of 48 mm in the longitudinal direction and 48 mm in the transverse direction of the layered product. After completing the stitching, the layered product was cut in the transverse direction and was removed from the jig for arranging the fiber bundles. When the layered product was placed on a flat plate, as shown in Fig. 23, large waves 192 were generated on respective reinforcing fiber layers 191, and it was understood that a preform could not be prepared.

Where, in the explanation hereinabove, the process and device for forming a preform using the device having the aforementioned bladders, and the process and device for producing a fiber-reinforced resin composite material using the preform, can be applied and developed for forming of a preform and for production of a fiber-reinforced resin composite material having a relatively long scale and a specified cross section, other than the curved preform and the curved fiber-reinforced resin composite material. The technology for forming a preform and the technology for producing a fiber-reinforced resin composite material using the preform as the developed technology using such a device having bladders will be explained hereinafter.

Namely, this developed technology relates to process and device for forming a preform and process and device for producing a fiber-reinforced resin composite material, and specifically, relates to process and device for forming a preform in which a reinforcing fiber substrate can be bent and formed efficiently in a predetermined shape before impregnation or curing of a matrix resin, and process and device for producing a fiber-reinforced resin composite material using the preform.

In particular, when a long-scaled fiber-reinforced resin composite material, for example, a fiber-reinforced resin composite material forming a long-scaled beam, is molded, in order to form flange portions, a method is frequently employed wherein both sides in a section of a flat-plate like reinforcing fiber substrate are bent and formed, and a matrix resin is impregnated into a dry reinforcing fiber substrate formed in a predetermined shape and the resin is cured. In case where a prepreg is used as a reinforcing fiber substrate, a method is frequently employed wherein, after bending and forming flange portions with predetermined shapes, the resin is cured by heating.

As the method for thus bending and forming a reinforcing fiber substrate in a predetermined shape before impregnation or curing of a matrix resin, a method using bladders (for example, the aforementioned Patent document 4) and a method using heated rollers (for example, the aforementioned Patent document 5) are known. Here, "bladder" means a pressurizing body composed of an elastic material such as a rubber, as aforementioned, which can be expanded and contracted like a balloon by introducing a fluid such as gas into and discharging it from the inside thereof for forming a fiber reinforcing fiber substrate in a predetermined shape, and by the expansion operation of this bladder, a predetermined portion of the reinforcing fiber substrate is pressed to a mold, thereby bending and forming the reinforcing fiber substrate in a predetermined shape.

As aforementioned, Patent document describes a method for forming a flat-plate like reinforcing fiber substrate in a C-shaped sectional shape. In this method, a bladder capable of being expanded and contracted is attached to one wall surface in a chamber, a reinforcing fiber substrate is placed on a mold (mandrel) disposed in the chamber, the bladder is expanded by closing the chamber at a sealed condition and vacuum evacuation the inside, and by pressing the reinforcing fiber substrate to the mandrel by the expanded bladder, the reinforcing fiber substrate is formed in the C-shaped sectional shape.

In this method, however, as aforementioned, because the bladder is provided at a condition of facing to the mandrel and interposing the reinforcing fiber substrate therebetween, the expanded bladder can press both side portions of the reinforcing fiber substrate only in a single direction, and therefore, it can be formed only in a C-shaped sectional shape as described above. Therefore, it cannot be applied to, for example, the forming in Z-shaped sectional shape and the like in which the bending directions of both side portions are opposite to each other. Further, because the expansion operation of a single bladder is utilized, the both side portions of reinforcing fiber substrate are bent substantially at the same time, and therefore, it becomes a forming process which is likely to leave wrinkles and the like in the bent portions, etc. at the time of bending.

Patent document 5 discloses, as aforementioned, a process for forming a layered product of prepregs in a T shape by nipping it in a press machine, and thereafter, by bending it by pressing a roller to a top portion thereof, forming a J-shape or Z-shape section. In this process, however, at least a drivable press machine, punching machine and roller device are required, and therefore, the apparatus becomes large-scaled, complicated and expensive.

Accordingly, it is desired to provide process and device for forming a preform and process and device for producing a fiber-reinforced resin composite material, in which basically a large-scaled drive system is not required, an installation with a simple structure and capable of being structured inexpensively may be used, and in addition to a C-shaped section, even if a sectional shape such as a Z-shaped section, in which the bending directions for forming are different from each other, further a shape having a curved portion in the longitudinal direction, is employed, the forming can be carried out smoothly and easily without causing the problems such as wrinkles and which is extremely suitable for molding a long-scaled beam member (stringer) and the like.

In order to satisfy the above-described requirements, a process for forming a preform and a process for producing a fiber-reinforced resin composite material explained here are characterized by comprising the steps of providing bladders capable of being operated in expansion and contraction independently from each other at both sides of a mold, respectively, and forming the respective portions of a reinforcing fiber substrate placed on the mold, which correspond to the positions of the respective bladders, in the respective shapes along the mold by the expansion operations of the respective bladders.

In this process, because the bladders are provided at both sides of the mold, respectively, and the respective bladders can be independently operated in expansion and contraction, the forming directions relative to the mold of the respective portions of the reinforcing fiber substrate placed on the mold, corresponding to the positions of the respective bladders, are not restricted, and the timings for forming also are not restricted. Therefore, the forming becomes possible in any case of a case required to be bent and formed in the same direction such as in a forming into C-shaped section and a case required to be bent and formed in directions different from each other such as in a forming into Z-shaped section. Further, by disordering the timings of the expansion operations of the bladders disposed at both sides, even if wrinkles or other inconveniences are to be generated in the substrate at the time of forming due to the expansion operation of one-side bladder, it becomes possible to form the substrate while expanding the substrate so as to remove the wrinkles or other inconveniences at the time of forming due to the expansion operation of the other-side bladder, and therefore, it becomes possible to carry out the forming smoothly and easily to a desirable shape at a target quality.

Thus, in the process for forming a preform and the process for producing a fiber-reinforced resin composite material, by controlling the order of the expansion operations of the bladders, the respective portions of the reinforcing fiber substrate corresponding to the positions of the respective bladders can be formed in order, thereby suppressing occurrence of inconveniences such as wrinkles at the time of forming.

Of course, it is possible to simultaneously form the respective portions of the reinforcing fiber substrate corresponding to the positions of the respective bladders, and in case where there is no fear or little of occurrence of inconveniences such as wrinkles, the time for forming can be shortened by such a simultaneous forming.

Further, although the reinforcing fiber substrate can be formed by using a single mold, in this process, it is also possible to form the reinforcing fiber substrate by nipping it between molds and form the portions of the reinforcing fiber substrate extending at both sides of the molds by the expansion operations of respective bladders. By nipping the reinforcing fiber substrate between the molds, even when the respective portions of the reinforcing fiber substrate are formed, the whole of the reinforcing fiber substrate can be held at a predetermined posture, and the accuracy of the forming to a predetermined shape is improved.

The forming basically may be carried out by pressing the predetermined portion of the reinforcing fiber substrate to a corresponding portion of the mold so as to become a shape along the mold. For example, by bending the respective portions of the reinforcing fiber substrate corresponding to the positions of the respective bladders by the expansion operations of respective bladders, a shape along the mold can be formed.

With respect to this forming, as aforementioned, a sectional shape such as a Z shape can be formed by bending the respective portions of the reinforcing fiber substrate corresponding to the positions of the respective bladders in directions opposite to each other, and a sectional shape such as a C shape can also be formed by bending the respective portions of the reinforcing fiber substrate corresponding to the positions of the respective bladders in the same direction.

Further, with respect to the expansion operations of the bladders, at least the bladders are contained in a chamber capable of being closed at a sealed condition, and the respective bladders can be expanded by reducing in pressure the inside of the chamber. In this case, for example, a manner can be employed wherein atmospheric air is introduced into the respective bladders when the inside of the chamber is reduced in pressure. Namely, the atmospheric air can be introduced into the bladders utilizing a pressure difference between the pressure reduced chamber inner pressure and the atmospheric pressure.

Alternatively, the respective bladders can also be expanded by introducing a pressurized fluid into the respective bladders. In this case, the above-described chamber capable of being reduced in pressure is not necessary. Whether utilizing the atmospheric pressure or introducing the pressurized fluid may be appropriately decided depending upon the characteristics or the size of the reinforcing fiber substrate to be formed.

Further, in the process for forming a preform and the process for producing a fiber-reinforced resin composite material, it is also possible to form the reinforcing fiber substrate in order in the longitudinal direction. This can be carried out by a method wherein, after formed by a predetermined length in the longitudinal direction, the reinforcing fiber substrate is pulled out, and the forming of the adjacent portion of the reinforcing fiber substrate in the longitudinal direction is repeated. In this method, because it is difficult to hold the airtight condition of the vacuum chamber, a method for introducing the pressurized fluid is employed more preferably. In particular, it is effective for a case where the reinforcing fiber substrate to be formed is long-sized, and by a small-sized forming device, a long-sized reinforcing fiber substrate can be formed at a predetermined shape in order.

Further, the process for forming a preform and the process for producing a fiber-reinforced resin composite material can be applied to any case of a case where the reinforcing fiber substrate comprises a dry reinforcing fiber material and a case where the reinforcing fiber substrate comprises a prepreg. In case where the reinforcing fiber substrate comprises a dry reinforcing fiber material, a step for heating the reinforcing fiber substrate at a condition where the respective bladders are expanded and the reinforcing fiber substrate is formed, and by that, stable forming into a predetermined shape and maintaining the formed shape become possible, In case where the reinforcing fiber substrate comprises a prepreg, a step for heating the reinforcing fiber substrate before forming, and by that, it becomes possible to soften the resin and carry out the forming operation such as bending for the prepreg more simply. Where, in any case, as the heating operation, heating from outside or heating from the inside of a mold can be employed, and heating of the reinforcing fiber substrate by introducing heated fluid into bladders can also be employed. A method for providing a flow path of heat medium in a mold and heating by circulating the heat medium in the flow path utilizing a mold temperature controller is more preferable because a large-scaled apparatus such as an oven is not necessary.

Further, the process for forming a preform and the process for producing a fiber-reinforced resin composite material are processes suitable, in particular, for a case where the reinforcing fiber substrate comprises a layered product. In case of a layered product, although there is a tendency that undesired internal stress and the like is generated and wrinkles and the like are likely to be generated when the reinforcing fiber substrate is formed by bending, as aforementioned, by disordering the timings of forming operations due to bladders capable of being operated independently from each other in accordance with portions to be formed and controlling the order of the forming operations, forming at a good quality becomes possible by suppressing occurrence of wrinkles, or by generating wrinkles in a portion other than a portion to be formed as a shape of a product, thereby suppressing occurrence of wrinkles within the shape of the product, or by dispersing wrinkles, thereby suppressing occurrence of a large wrinkle.

In particular, in case where the reinforcing fiber substrate comprises a layered product of dry reinforcing fiber materials. a structure is preferably employed wherein the reinforcing fiber substrate comprises a layered product of dry reinforcing fiber materials each having resin particles on its surface and adjacent reinforcing fiber materials are partially bonded to each other by the resin particles, and by this, it becomes possible to handle it as a layered product while keeping the formation, and because an appropriate drape property of the substrate for forming operation can be maintained, it becomes possible to form it while suppressing occurrence of wrinkles properly. Further, by heating at the formed condition and boding between the adjacent reinforcing fiber materials, having been partially bonded, over the entire surface, it becomes easier to maintain it at a predetermined shape after forming. Further, by pressing it by expanding bladders at a condition where the resin particles are softened by heating, it becomes also possible to control the thickness of the layered product by deforming the resin particles and thinning the layered product.

Further, the process for forming a preform and the process for producing a fiber-reinforced resin composite material are suitable for a case of forming a long-scaled reinforcing fiber substrate in a predetermined sectional shape. In this case, the reinforcing fiber substrate can also be formed in a shape extending linearly along the longitudinal direction, and particularly in the process, the reinforcing fiber substrate can be formed in a shape having a curved portion as viewed in a direction along the longitudinal direction. In particular, in case of forming in a shape having a curved portion, although a possibility of occurrence of wrinkles and the like at the time of forming becomes high, as aforementioned, by disordering the timings of forming operations due to bladders capable of being operated independently from each other in accordance with portions to be formed, it becomes possible to absorb the wrinkles and the like easily. Further, in case of forming in a shape having a curved portion, it is preferred to form the both side portions of a central portion of the curved section in the longitudinal direction after forming the both side portions in the longitudinal direction in advance. If the both side portions in the longitudinal direction are formed first, when the central portion of the curved section in the longitudinal direction is formed, there is a fear that a stretched portion is generated in a portion to be formed of the reinforcing fiber substrate (in particular, in a portion to be formed in a recessed shape), and that forming into a predetermined shape becomes difficult or wrinkles are generated. By forming the central portion of the curved section in the longitudinal direction in advance, the both side portions can be held at an unfixed condition when the central portion is formed, the stress generating wrinkles and the like in the central portion can be released to the both side portions, and because the both side portions can be successively formed at a condition where an undesired stress is not left, forming into a shape without occurrence of wrinkles and the like as a whole becomes possible. Furthermore, it is more preferable that the forming of both side portions in the curved section in the longitudinal direction is carried out almost symmetrically in the longitudinal direction, relative to the central portion formed in advance. In such a method, forming into a shape without occurrence of wrinkles and the like becomes possible more securely.

Further, in the process for forming a preform and the process for producing a fiber-reinforced resin composite material, if possible, it is also preferable to form slits beforehand, which extend in a direction crossing the longitudinal direction of the reinforcing fiber substrate, at the respective portions of the reinforcing fiber substrate corresponding to the positions of the respective bladders and/or at least at a part of the portions near them. In this case, it is also carried out that the slits extending in a direction crossing the longitudinal direction of the reinforcing fiber substrate are formed only at a portion of the reinforcing fiber substrate corresponding to the position of one bladder and/or at least at a part of the portion near it, are formed beforehand, and after the other portion of the reinforcing fiber substrate corresponding to the position of the other bladder, in which slits are not formed, is formed by the expansion operation of the other bladder, the portion of the reinforcing fiber substrate at the side with formed slits is formed by the expansion operation of the one bladder.

For example, it is preferred to use a reinforcing fiber substrate in which slits (notches) are provided in a direction crossing to the longitudinal direction of the reinforcing fiber substrate at a position of the reinforcing fiber substrate to be formed as a flange portion. In particular, in case having a curved section in the longitudinal direction, by providing such slits, occurrence of wrinkles at the time of forming can be preferably suppressed. Furthermore, by using bladders capable of being operated independently from each other and by forming the portion with the slits corresponding to one flange portion after forming the portion with no slits corresponding to the other flange portion in advance, occurrence of wrinkles can be suppressed efficiently.

The kind of the reinforcing fiber substrate in the process for forming a preform and the process for producing a fiber-reinforced resin composite material, in particular, the kind of used reinforcing fibers is not particularly limited. Typically, the reinforcing fiber substrate comprises a substrate containing carbon fibers. Of course, a reinforcing fiber substrate containing other reinforcing fibers, for example, glass fibers or aramide fibers, may be used, and it may be a reinforcing fiber substrate of a hybrid structure containing two or more kinds of reinforcing fibers.

In the process for producing a fiber-reinforced resin composite material, after forming the above-described reinforcing fiber substrate, a desired fiber-reinforced resin composite material is produced by curing the matrix resin. In particular, in case where the reinforcing fiber substrate comprises a dry reinforcing fiber material, a so-called RTM molding process (Resin Transfer Molding) can be employed wherein the resin is impregnated into the reinforcing fiber substrate and cured after the reinforcing fiber substrate is formed. Further, a Vacuum assisted RTM (VaRTM) utilizing a vacuum pressure can also be employed. The VaRTM is more preferable because a pressing device is not necessary and the molding can be carried out simply. In case of prepreg, a molding process can be employed wherein, after molding, the matrix resin is cured by heating and pressing using an autoclave.

The device for forming a preform and the device for producing a fiber-reinforced resin composite material comprise a mold for forming a reinforcing fiber substrate, and bladders provided at both sides of the mold, respectively, capable of being operated in expansion and contraction independently from each other and capable of forming corresponding portions of the reinforcing fiber substrate placed on the mold in a shape along the mold by the expansion operation.

In the device for forming a preform and the device for producing a fiber-reinforced resin composite material, a structure can be employed wherein the above-described mold comprises at least a pair of molds capable of nipping the reinforcing fiber substrate, and the above-described respective bladders can form the portions of the reinforcing fiber substrate extending at both sides of the pair of molds by their expansion operations.

Further, a structure can be employed wherein the respective bladders can form the reinforcing fiber substrate in a shape along the mold. If the bladders provided at both sides of the mold are structured to be able to bend the portions of the reinforcing fiber substrate corresponding to the positions of the respective bladders in directions opposite to each other, a smooth forming into a Z-shaped sectional shape and the like becomes possible, and if the bladders provided at both sides of the mold are structured to be able to bend the portions of the reinforcing fiber substrate corresponding to the positions of the respective bladders in the same direction, a smooth forming into a C-shaped sectional shape and the like becomes possible.

Further, a structure can be employed wherein a chamber is provided in which the respective bladders are stored, and which can expand the respective bladders by reducing in pressure the inside thereof. In such a structure, the respective bladders can be formed so as to be able to introduce atmospheric air into the respective bladders when the inside of the chamber is reduced in pressure, and the atmospheric pressure can be utilized.

Further, a structure can also be employed wherein the respective bladders can be expanded by being introduced therein with a pressurized fluid. In such a structure, the above-described chamber for pressure reduction is not necessary.

Further, the device for forming a preform and the device for producing a fiber-reinforced resin composite material are also structured, in particular in case where the reinforcing fiber substrate to be formed is long-sized, so as to be able to form the reinforcing fiber substrate in order in the longitudinal direction. Moreover, by employing a structure wherein a predetermined length of the substrate can be pulled out in the longitudinal direction after forming by a predetermined length, the device can be made small-sized.

Further, the reinforcing fiber substrate may comprise dry reinforcing fiber materials or may comprise a prepreg. In the former case, it is preferred to provide means capable of heating the reinforcing fiber substrate at a condition being formed, and in the latter case, it is preferred to provide means capable of heating the reinforcing fiber substrate before being formed.

Further, the reinforcing fiber substrate can be formed as a layered product, and in particular, in case where the reinforcing fiber substrate is formed from a layered product of dry reinforcing fiber materials, it is preferred that the adjacent reinforcing fiber materials are bonded partially therebetween by resin particles, etc.

Further, the reinforcing fiber substrate can be formed in a shape extending linearly along the longitudinal direction, and can also be formed in a shape having a curved section as viewed in a direction along the longitudinal direction. In case being formed in a shape having a curved section, it is preferably structured so as to be able to form both side portions in the longitudinal direction of the central portion of the curved section after forming the central portion in the longitudinal direction.

Further, a structure can also be employed wherein slits extending in a direction crossing the longitudinal direction of the reinforcing fiber substrate are formed beforehand at the respective portions of the reinforcing fiber substrate corresponding to the positions of the respective bladders and/or at least at a part of the portions near them. In this case, a structure controlling the operation order of both bladders can be employed so that the slits extending in a direction crossing the longitudinal direction of the reinforcing fiber substrate are formed only at a portion of the reinforcing fiber substrate corresponding to the position of one bladder and/or at least at a part of the portion near it, are formed beforehand, and after the other portion of the reinforcing fiber substrate corresponding to the position of the other bladder, in which slits are not formed, is formed by the expansion operation of the other bladder, the portion of the reinforcing fiber substrate at the side with formed slits is formed by the expansion operation of the one bladder.

As the reinforcing fiber substrate, typically, a substrate containing carbon fibers can be exemplified.

The device for producing a fiber-reinforced resin composite material has a means for curing a matrix resin in order to obtain a desired fiber-reinforced resin composite material. In particular, in case where the reinforcing fiber substrate is formed from dry reinforcing fiber materials, the device has means for impregnating the resin into the reinforcing fiber substrate after forming the reinforcing fiber substrate and curing the resin.

According to such device for forming a preform and device for producing a fiber-reinforced resin composite material, basically a drive system is not required or a large-scaled drive system is not required, the device can be formed as a simple and inexpensive structure, and only by the expansion/contraction operations of the respective bladders capable of being operated independently from each other, even if the sectional shape such as a Z-shaped section, in which the bending directions for forming are different from each other, in addition to a C-shaped section, further a shape having a curved section in the longitudinal direction, is employed, the reinforcing fiber substrate can be formed in a desirable shape smoothly and easily without causing the problems such as wrinkles. In particular, by controlling the order of the expansion operations of the respective bladders, even in case where the reinforcing fiber substrate is a layered product, it becomes possible to properly suppress occurrence of inconveniences such as wrinkles while allowing an appropriate shift between layers, thereby forming the reinforcing fiber substrate in a desirable shape with an excellent quality at a high accuracy.

Hereinafter, desirable embodiments of the process and device for forming a preform and the process and device for producing a fiber-reinforced resin composite material will be explained referring to the drawings.

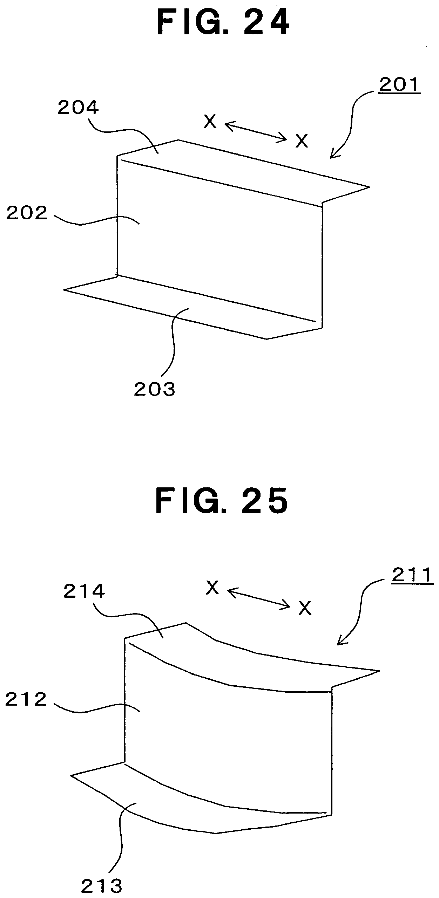

Figs. 24-27 show typical forming shapes of the reinforcing fiber substrate in the process and device for forming a preform and the process and device for producing a fiber-reinforced resin composite material. As aforementioned, this reinforcing fiber substrate can be from dry reinforcing fiber materials and can also be formed from a prepreg, and can be formed at any of a single layer and a layered product thereof. A reinforcing fiber substrate 201 shown in Fig. 24 after forming is formed in a shape in which the cross-sectional shape comprises a web portion 202 and flange portions 203, 204 extending and bending in directions opposite to each other at both sides of the web portion 202 and which extends linearly in the longitudinal direction X-X. Herein, such a sectional shape is called as a Z-shaped sectional shape, and the Z-shaped sectional shape is a concept that also includes a shape in which bending angles of flange portions 203, 204 from web portion 202 are other than 90 degrees, and that also includes a shape in which bending angles of flange portions 203, 204 relative to web portion 202 are different from each other. Further, the sizes of flange portions 203, 204 may be either same or different from each other.

Further, a reinforcing fiber substrate 211 shown in Fig. 25 after forming is formed in a shape in which the cross-sectional shape is formed in a Z-shaped sectional shape comprising a web portion 212 and flange portions 213, 214 extending and bending in directions opposite to each other at both sides of the web portion 212, and which has a curved portion as viewed in a direction along the longitudinal direction X-X. Although an example is shown in Fig. 25 in which the whole is curved, also included are a form which has a curved portion partially in the longitudinal direction X-X and in which the other portions are formed in linearly extending shapes such as one shown in Fig. 24, and a form in which there are a plurality of curved portions and/or linearly extending portions in the longitudinal direction X-X. With respect to the Z-shaped sectional shape, a concept is included up to the concept similar to that explained for Fig. 24. Further, the sizes of flange portions 213, 214 may be either same or different from each other.

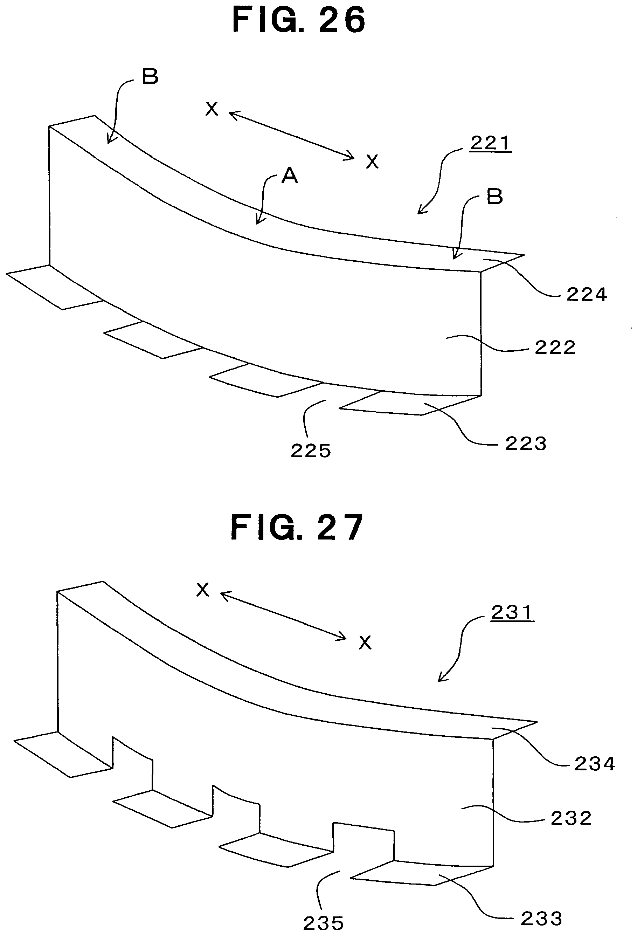

Further, a reinforcing fiber substrate 221 shown in Fig. 26 after forming is formed in a shape in which the cross-sectional shape is formed in a Z-shaped sectional shape comprising a web portion 222 and flange portions 223, 224 extending and bending in directions opposite to each other at both sides of the web portion 222, and which has a curved portion as viewed in a direction along the longitudinal direction X-X. Then, a plurality of slits 225 each extending in a direction crossing the longitudinal direction X-X are formed in one flange portion 223, and these slit 225 are formed beforehand at the corresponding positions of the flange portion 223 of the reinforcing fiber substrate 221 at the stage before forming. Similarly to in the case of Fig. 25, although an example is shown in Fig. 26 in which the whole is curved, also included are a form which has a curved portion partially in the longitudinal direction X-X and in which the other portions are formed in linearly extending shapes such as one shown in Fig. 24, and a form in which there are a plurality of curved portions and/or linearly extending portions in the longitudinal direction X-X. With respect to the Z-shaped sectional shape, a concept is included up to the concept similar to that explained for Fig. 24. Further, the sizes of flange portions 223, 224 may be either same or different from each other.

Further, a reinforcing fiber substrate 231 shown in Fig. 27 after forming is formed in a shape in which the cross-sectional shape is formed in a Z-shaped sectional shape comprising a web portion 232 and flange portions 233, 234 extending and bending in directions opposite to each other at both sides of the web portion 232, and which has a curved portion as viewed in a direction along the longitudinal direction X-X. Then, a plurality of slits 235, each extending in a direction crossing the longitudinal direction X-X from flange portion 233 up to a part of web portion 232, are formed in a portion corresponding to one flange portion 233, and these slit 235 are formed beforehand at the corresponding positions of the flange portion 233 and the web portion 232 of the reinforcing fiber substrate 231 at the stage before forming. Similarly to in the case of Fig. 25, although an example is shown in Fig. 27 in which the whole is curved, also included are a form which has a curved portion partially in the longitudinal direction X-X and in which the other portions are formed in linearly extending shapes such as one shown in Fig. 24, and a form in which there are a plurality of curved portions and/or linearly extending portions in the longitudinal direction X-X. With respect to the Z-shaped sectional shape, a concept is included up to the concept similar to that explained for Fig. 24. Further, the sizes of flange portions 233, 234 may be either same or different from each other.

Furthermore, as aforementioned, the present invention can be applied to forming of the reinforcing fiber substrate into a C-shaped sectional shape. Although the figure is omitted, for example, when the sectional shape shown in Fig. 24 having bent and formed flange portions 203, 204 at both sides of web portion 202 is referred, the C-shaped sectional shape in the present invention means a sectional shape in which the flange portions 203, 204 are bent in a same direction, and at that time, the bending angles of flange portions 203, 204 relative to web portion 202 may be either same or different from each other, and angles other than 90 degrees are also included. Further, the sizes of flange portions 203, 204 may be either same or different from each other.

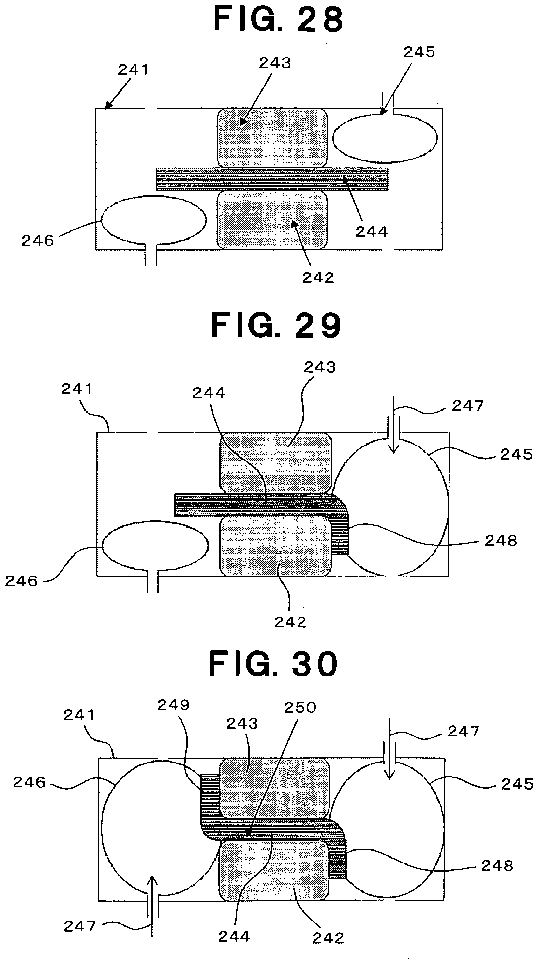

With respect to forming of the reinforcing fiber substrate in, an example for forming into a Z-shaped sectional shape as shown in Figs. 24-27 will be explained referring to Figs. 28-30. Figs. 28-30 are basically the same as aforementioned Fig. 16 (A), (B) and (C). Figs. 28-30 show an example wherein, for example, when a long-scaled beam (a stringer) is produced as a fiber-reinforced resin composite material, a flat-plate like reinforcing fiber substrate comprising a layered product of dry reinforcing fiber materials is formed to prepare a preform, and show a case where the forming is carried out using a chamber capable of being closed at a sealed condition.

First, as shown in Fig. 28, at predetermined positions in a chamber 241, mandrels 242, 243 as molds, a layered product 244 as a reinforcing fiber substrate nipped between mandrels 242, 243, and bladders 245, 246 capable of being operated independently from each other and disposed at both sides of mandrels 242, 243, respectively, are provided. Bladders 245, 246 are made from, for example, a silicone rubber, and they are expanded by introducing a relatively pressurized fluid into them and contracted by discharging the pressurized fluid.

By closing chamber 241 and reducing in pressure the inside of the bladder 245 containing-side portion in chamber 241, as shown in Fig. 29, atmospheric air 247 is introduced into bladder 245 from outside, and the bladder 245 expands by being relatively pressurized by a pressure difference between the pressure of the introduced atmospheric air 247 (atmospheric pressure) and the inner pressure of the pressure-reduced chamber 241. By this expanded bladder 245, one end portion 248 in the section of layered product 244 is pressed to mandrel 242, and it is bent and formed in a shape along the side-surface shape of the mandrel 242.

Next, by reducing in pressure the inside of the bladder 246 containing-side portion in chamber 241, as shown in Fig. 30, atmospheric air 247 is introduced into bladder 246 from outside, and the bladder 246 expands by being relatively pressurized by a pressure difference between the pressure of the introduced atmospheric air 247 (atmospheric pressure) and the inner pressure of the pressure-reduced chamber 241. By this expanded bladder 246, the other end portion 249 in the section of layered product 244 is pressed to mandrel 243, and it is bent and formed in a shape along the side-surface shape of the mandrel 243. A Z-shaped section preform 250 is formed by bending and forming the end portions in the section of layered product 244 in directions opposite to each other; one end portion 248 to mandrel 242 side and the other end portion 249 to mandrel 243 side.

Next, by heating at the condition of Fig. 30, the formed shape of layered product 244 is held. The heating may be carried out either by heating the entire inside of chamber 241 or by heating mandrels 242, 243 by communication of heat medium, electric heater, etc. Further, it is also possible to heat the fluid to be introduced into bladders 245, 246.

Thus, using dry preform 250 formed in a Z-shaped sectional shape, for example, by RTM molding process, a matrix resin (for example, a thermosetting resin such as an epoxy resin) is impregnated into preform 250, it is heated at a predetermined temperature and cured, and a fiber-reinforced resin composite material with a desired shape is produced.

Although layered product 244 of dry reinforcing fiber materials is used in the above-described example, it is also possible to use a layered product of prepregs, and in that case, a process for impregnating a matrix resin is not necessary. Further, in case where a shape having a curved portion as shown in Fig. 25 is formed, as needed, so that the curved forming can be carried out more smoothly, as shown in Figs. 26 and 27, slits (notches) may be provided in flange portions 223, 233 or in a part of web portion 232.

In particular, the forming device shown in Figs. 28-30 is very simple in device structure, because it does not have a drive system and atmospheric pressure is used as the source for pressurizing. Further, by controlling the order of pressing operations due to the respective bladders 245, 246, the order of the forming operations can be easily controlled. By controlling the order of the forming operations due to the respective bladders 245, 246, particularly in case forming into a shape having a curved shape as shown in Figs. 25-27, because the forming can be carried out while the reinforcing fiber bundles forming the layered product are appropriately shifted, wrinkles and the like become hard to be generated. In particular, in case having a curved portion and having slits (notches) 225, 235 in flange portions 223, 233 as shown in Figs. 26 and 27 (as the case may be, having slits 235 also in web portion 232), by forming the flange portions 224, 234 at sides with no slits in advance and thereafter forming the flange portions 223, 233 having slits, wrinkles and the like become hard to be generated.

Further, in case forming into a shape having a curved shape as shown in Figs. 25-27, it is preferred that, after the central portion in the longitudinal direction of the curved shape is formed in advance, and thereafter, the both side portions of the central portion in the longitudinal direction is formed. For example, when the forming into the shape having a curved portion shown in Fig. 26 is referred, in particular, when the flange portion 224 at a side with no slits is formed, it is preferred that, after the central portion A in the longitudinal direction of the curved portion is formed in advance, the portions B, B at both sides of the central portion A in the longitudinal direction are formed. The portions B, B at both sides may be formed in order, and it is possible to form them simultaneously. Furthermore, it is preferred that the portions B, B at both sides are disposed symmetrically relative to the central portion A in the longitudinal direction. Thus, by forming the central portion A in the longitudinal direction in advance, as aforementioned, forming into a desirable shape without occurrence of wrinkles and the like becomes possible.

Where, although atmospheric air 247 is introduced into bladders 245, 246 in the above-described example, as aforementioned, it is also possible to introduce an appropriate pressurized fluid other than atmospheric air 247. In such a case, because the bladders 245, 246 can be expanded by the introduced pressurized fluid, the chamber capable of being closed at a sealed condition is not necessary. However, members for receiving reaction forces when bladders 245, 246 expand to exhibit pressing forces in the forming directions are required.

Furthermore, as aforementioned, this technology can be applied also to forming into a C-shaped section. For example, in Figs. 28-30, if bladders are disposed at positions symmetric positions in the left and right sides relative to mandrel 242 or 243, easily the forming into a C-shaped section becomes possible.

Such a technology using bladders can be applied to any forming for a fiber-reinforced resin composite material in which bending and forming operation is required at both sides of a mold.

### Industrial Applications of the Invention

The present invention can be suitable, in particular, for molding of a large and long-scaled curved fiber-reinforced resin composite material, forming of a preform served to the molding, preparation of a reinforcing-fiber layered product served to the forming of the preform, and preparation of a reinforcing fiber substrate served to the preparation of the layered product, and for example, suitable to be applied to molding of a body frame of an air plane.

## Claims

1. A process for producing a curved reinforcing-fiber layered product (71, 112, 124) by layering a plurality of flat-plate like reinforcing fiber layers (72, 72a, 72b, 72c, 72d) each having a curved shape as a planar shape, comprising the steps of:
forming a curved circumferentially oriented reinforcing fiber layer (72, 72a, 72b, 72c, 72d), in which a plurality of reinforcing fiber yarns (2) are arranged in parallel to a direction along a circumferential direction of said curved shape, using a curved reinforcing fiber substrate having a curved shape as a planar shape, wherein a plurality of reinforcing fiber yarns (2) are arranged in parallel to a direction along a circumferential direction of said curved shape, and auxiliary weft yarns (4) are arranged in directions crossing said plurality of reinforcing fiber yarns (2) each arranged in one direction of said circumferential direction; and
layering said curved circumferentially oriented reinforcing fiber layer(72, 72a, 72b, 72c, 72d) as at least one layer among a plurality of reinforcing fiber layers (72, 72a, 72b, 72c, 72d) to be layered.
**characterized in that** at least one layer among said reinforcing fiber layers (72, 72a, 72b, 72c, 72d) to be layered different from said curved circumferentially oriented reinforcing fiber layer(72, 72a, 72b, 72c, 72d) is formed, wherein a plurality of orthogonally cut unidirectional reinforcing fiber yarn bundles (21, 31) are prepared by cutting a unidirectional reinforcing fiber woven fabric, formed from reinforcing fiber yarn groups each arranged with a plurality of continuous reinforcing fiber yarns (2) in one direction in parallel to each other and auxiliary yarns (4) extending in a direction crossing said reinforcing fiber yarns (2) and bundling a plurality of said reinforcing fiber yarn groups, in a direction perpendicular to said reinforcing fiber yarns (2), and said plurality of orthogonally cut unidirectional reinforcing fiber yarn bundles (21, 31) are disposed in a direction along a circumferential direction of said curved shape so that reinforcing fiber yarns (2) of respective yarn bundles (21, 31) extend in a radial direction of said curved shape and/or
at least one layer among said reinforcing fiber layers (72, 72a, 72b, 72c, 72d) to be layered different from said curved circumferentially oriented reinforcing fiber layer (72, 72a, 72b, 72c, 72d) is formed, wherein a plurality of acute-angle cut unidirectional reinforcing fiber yarn bundles (21, 31) are prepared by cutting a unidirectional reinforcing fiber woven fabric, formed from reinforcing fiber yarn groups each arranged with a plurality of continuous reinforcing fiber yarns (2) in one direction in parallel to each other and auxiliary yarns (4) extending in a direction crossing said reinforcing fiber yarns (2) and bundling a plurality of said reinforcing fiber yarn groups, in a direction defined at a predetermined acute angle relative to said reinforcing fiber yarns (2), and said plurality of acute-angle cut unidirectional reinforcing fiber yarn bundles (21,31) are disposed in a direction along a circumferential direction of said curved shape so that reinforcing fiber yarns (2) of respective yarn bundles (21, 31) extend in a direction defined at a predetermined angle relative to a radial direction of said curved shape.

## Patentansprüche

1. Verfahren zum Herstellen eines gekrümmten
Verstärkungsfaserschichtprodukts (71, 112, 124) durch Schichten einer Vielzahl von flachplattenförmigen Verstärkungsfaserschichten (72, 72a, 72b, 72c, 72d), die jeweils eine gekrümmte Form als planare Form aufweisen, das folgende Schritte umfasst:
Ausbilden einer gekrümmten, in Umfangsrichtung ausgerichteten Verstärkungsfaserschicht (72, 72a, 72b, 72c, 72d), in der eine Vielzahl von Verstärkungsfasergarnen (2) parallel zu einer Richtung entlang einer Umfangsrichtung der gekrümmten Form unter Verwendung eines gekrümmten Verstärkungsfasersubstrats mit gekrümmter Form als planare Form angeordnet ist, wobei eine Vielzahl von Verstärkungsfasergarnen (2) parallel zu einer Richtung entlang einer Umfangsrichtung der gekrümmten Form angeordnet ist, und Hilfsschussfäden (4) in Richtungen angeordnet sind, welche die Vielzahl von Verstärkungsfasergarnen (2) kreuzen, die jeweils in einer Richtung der Umfangsrichtung angeordnet sind; und
Schichten der gekrümmten, in Umfangsrichtung ausgerichteten Verstärkungsfaserschicht (72, 72a, 72b, 72c, 72d) als zumindest eine Schicht aus einer Vielzahl von zu schichtenden Verstärkungsfaserschichten (72, 72a, 72b, 72c, 72d),
**dadurch gekennzeichnet, dass**
zumindest eine Schicht aus den zu schichtenden Verstärkungsfaserschichten (72, 72a, 72b, 72c, 72d), die sich von der gekrümmten, in Umfangsrichtung ausgerichteten Verstärkungsfaserschicht (72, 72a, 72b, 72c, 72d) unterscheidet, gebildet wird, wobei
eine Vielzahl von orthogonal geschnittenen unidirektionalen Verstärkungsfasergarnbündeln (21, 31) durch Schneiden eines unidirektionalen Verstärkungsfasergewebes angefertigt wird, das aus Verstärkungsfasergarngruppen, die jeweils mit einer Vielzahl von durchgehenden Verstärkungsfasergarnen (2) in einer Richtung parallel zueinander angeordnet sind, und Hilfsfäden (4) gebildet ist, die sich in einer Richtung erstrecken, welche die Verstärkungsfasergarne (2) und Bündel einer Vielzahl der Verstärkungsfasergarngruppen in einer Richtung senkrecht zu den Verstärkungsfasergarnen (2) kreuzt, und die Vielzahl von orthogonal geschnittenen unidirektionalen Verstärkungsfasergarnbündeln (21, 31) in einer Richtung entlang einer Umfangsrichtung der gekrümmten Form so angeordnet ist, dass sich die Verstärkungsfasergarne (2) der jeweiligen Garnbündel (21, 31) in radialer Richtung der gekrümmten Form erstrecken, und/oder
zumindest eine Schicht aus den zu schichtenden Verstärkungsfaserschichten (72, 72a, 72b, 72c, 72d), die sich von der gekrümmten, in Umfangsrichtung ausgerichteten Verstärkungsfaserschicht (72, 72a, 72b, 72c, 72d) unterscheidet, gebildet wird, wobei
eine Vielzahl von spitzwinklig geschnittenen unidirektionalen Verstärkungsfasergarnbündeln (21, 31) durch Schneiden eines unidirektionalen Verstärkungsfasergewebes angefertigt wird, das aus Verstärkungsfasergarngruppen gebildet ist, die jeweils mit einer Vielzahl von durchgehenden Verstärkungsfasergarnen (2) in einer Richtung parallel zueinander und Hilfsfäden (4) angeordnet sind, die sich in einer Richtung erstrecken, welche die Verstärkungsfasergarne (2) und Bündel einer Vielzahl von Verstärkungsfasergarngruppen in einer Richtung kreuzt0, die unter einem vorbestimmten spitzen Winkel relativ zu den Verstärkungsfasergarnen (2) definiert ist, und die Vielzahl von spitzwinklig geschnittenen unidirektionalen Verstärkungsfasergarnbündeln (21, 31) in einer Richtung entlang einer Umfangsrichtung der gekrümmten Form so angeordnet ist, dass sich Verstärkungsfasergarne (2) der jeweiligen Garnbündel (21, 31) in einer Richtung erstrecken, die unter einem vorbestimmten Winkel relativ zu einer radialen Richtung der gekrümmten Form definiert ist.

## Revendications

1. Procédé de production d'un produit courbé en couches de fibres de renforcement (71, 112, 124) par superposition d'une pluralité de couches de fibres de renforcement en forme de plaques plates (72, 72a, 72b, 72c, 72d) ayant chacune une forme courbée comme une forme plane, comprenant les étapes de :
former une couche de fibres de renforcement courbée orientée de manière circonférentielle (72, 72a, 72b, 72c, 72d), où une pluralité de fils de fibres de renforcement (2) sont agencés parallèlement à une direction le long d'une direction circonférentielle de ladite forme courbée, en utilisant un substrat de fibres de renforcement courbé ayant une forme courbée comme une forme plane, où une pluralité de fils de fibres de renforcement (2) sont agencés parallèlement à une direction le long d'une direction circonférentielle de ladite forme courbée, et des fils de trame auxiliaires (4) sont agencés dans des directions croisant ladite pluralité de fils de fibres de renforcement (2) agencés chacun dans une direction de ladite direction circonférentielle ; et
superposer ladite couche de fibres de renforcement courbée orientée de manière circonférentielle (72, 72a, 72b, 72c, 72d) en tant qu'au moins une couche parmi une pluralité de couches de fibres de renforcement (72, 72a, 72b, 72c, 72d) à superposer,
**caractérisé en ce que**
au moins une couche parmi lesdites couches de fibres de renforcement (72, 72a, 72b, 72c, 72d) à superposer différente de ladite couche de fibres de renforcement courbée orientée de manière circonférentielle (72, 72a, 72b, 72c, 72d) est formée, dans lequel
une pluralité de faisceaux de fils de fibres de renforcement unidirectionnels coupés orthogonalement (21, 31) sont préparés en coupant un tissu tissé unidirectionnel de fibres de renforcement, formé à partir de groupes de fils de fibres de renforcement agencés chacun avec une pluralité de fils de fibres de renforcement continus (2) dans une direction parallèlement les uns aux autres et de fils auxiliaires (4) s'étendant dans une direction croisant lesdits fils de fibres de renforcement (2) et en regroupant une pluralité desdits groupes de fils de fibres de renforcement, dans une direction perpendiculaire auxdits fils de fibres de renforcement (2), et ladite pluralité de faisceaux de fils de fibres de renforcement unidirectionnels coupés orthogonalement (21, 31) sont disposés dans une direction le long d'une direction circonférentielle de ladite forme courbée de sorte que les fils de fibres de renforcement (2) des faisceaux de fils respectifs (21, 31) s'étendent dans une direction radiale de ladite forme courbée et/ou
au moins une couche parmi lesdites couches de fibres de renforcement (72, 72a, 72b, 72c, 72d) à superposer différente de ladite couche de fibres de renforcement courbée orientée de manière circonférentielle (72, 72a, 72b, 72c, 72d) est formée, dans lequel
une pluralité de faisceaux de fils de fibres de renforcement unidirectionnels coupés à angle aigu (21, 31) sont préparés en coupant un tissu tissé unidirectionnel de fibres de renforcement, formé à partir de groupes de fils de fibres de renforcement agencés chacun avec une pluralité de fils de fibres de renforcement continus (2) dans une direction parallèlement les uns aux autres et de fils auxiliaires (4) s'étendant dans une direction croisant lesdits fils de fibres de renforcement (2) et en regroupant une pluralité desdits groupes de fils de fibres de renforcement, dans une direction définie selon un angle aigu prédéterminé par rapport auxdits fils de fibres de renforcement (2), et ladite pluralité de faisceaux de fils de fibres de renforcement unidirectionnels coupés à angle aigu (21, 31) sont disposés dans une direction le long d'une direction circonférentielle de ladite forme courbée de sorte que les fils de fibres de renforcement (2) des faisceaux de fils respectifs (21, 31) s'étendent dans une direction définie selon un angle prédéterminé par rapport à une direction radiale de ladite forme courbée.
